(19) Europäisches Patentamt
European Patent Office
Office européen des brevets

(11) **EP 1 773 530 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(21) Anmeldenummer: **05750394.8**

(22) Anmeldetag: **17.06.2005**

(51) Int Cl.:
**B23F 23/00** (2006.01)    **B23F 9/08** (2006.01)

(86) Internationale Anmeldenummer:
**PCT/EP2005/006542**

(87) Internationale Veröffentlichungsnummer:
**WO 2006/133727 (21.12.2006 Gazette 2006/51)**

(54) **VERFAHREN, VORRICHTUNG UND ERZEUGNIS ZUR FREIFORMOPTIMIERUNG VON KEGEL- UND HYPOIDZAHNRÄDERN**

METHOD, DEVICE AND PRODUCT FOR OPTIMIZING FREE FORMING OF BEVEL AND HYPOID GEARS

PROCEDE, DISPOSITIF ET PRODUIT POUR OPTIMALISER LE FORMAGE LIBRE DE ROUES DENTEES CONIQUES OU HYPOIDES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2005 WOPCT/EP2005/006485**

(43) Veröffentlichungstag der Anmeldung:
**18.04.2007 Patentblatt 2007/16**

(73) Patentinhaber: **Klingelnberg GmbH**
**42499 Hückeswagen (DE)**

(72) Erfinder:
• **MÜLLER, Hartmuth**
**42857 Remscheid (DE)**
• **VOGEL, Olaf**
**76275 Ettlingen (DE)**
• **DUTSCHK, Roland**
**01187 Dresden (DE)**
• **HÜNECKE, Carsten**
**42499 Hückeswagen (DE)**

(74) Vertreter: **Kiani, Nassim et al**
**Kiani & Springorum,**
**Patent- und Rechtsanwälte,**
**Taubenstrasse 4**
**40479 Düsseldorf (DE)**

(56) Entgegenhaltungen:
**EP-B- 0 784 525          US-A- 4 981 402**
**US-A- 5 716 174**

**Beschreibung**

Die vorliegende Erfindung betrifft ein Verfahren und eine Vorrichtung zur Freiformoptimierung von Kegel- und Hypoidzähnrädern, Verfahren und Vorrichtungen zur Herstellung solch optimierter Zahnräder sowie Verfahren und Vorrichtung zur Korrektur bereits hergestellter Kegel- und Hypoidzahnräder mittels Freiformoptimierung.

Bei der Fertigung von Zahnrädern, insbesondere der Fertigung von Kegel- und Hypoidzahnrädern werden heutzutage immer höhere Anforderungen an die Laufeigenschaften und die Beanspruchung solcher Zahnräder gestellt, wie etwa die Ruhe ihres Laufs. Diese Eigenschaften sind durch Zahnräder, wie sie etwa auf Maschinen älterer Bauart gefertigt werden können nicht mehr zu erreichen, da diese Maschinen keine ausreichenden Möglichkeiten bieten, die Oberflächengeometrie der Zahnräder im Sinne moderner erhöhter Anforderungen an die Laufeigenschaften und die Beanspruchung zu beeinflussen.

Bei diesen Maschinen älterer Bauart, im folgenden Nicht-Freiform-Maschinen genannt, stehen nämlich zur Beeinflussung der Zahnradgeometrie, insbesondere der Zahngeometrie grundsätzlich zunächst lediglich eine Auswahl sogenannter Basis-Maschineneinstellungen zur Verfügung, die jeweils eine theoretische Bedeutung für das herzustellende Zahnrad aufweisen. Diese Basis-Maschineneinstellungen sind dabei auf eine sogenannte Basismaschine bezogen, welche ein mathematisch theoretisches Modell darstellt, auf das alle denkbaren realen Nicht-Freiform-Maschinen umkehrbar eindeutig abgebildet werden können, wobei die realen Nicht-Freiform-Maschinen zumeist weniger Achsen aufweisen, als die Basismaschine (auch Basisverzahnmaschine genannt), dann aber auch nicht alle Arten von Verzahnungen fertigen können.

Eine Darstellung dieser Basismaschine und ihrer Basis-Maschineneinstellungen findet sich etwa bei Goldrich (Goldrich, *"CNC Generation of Spiral Bevel and Hypoid Gears: Theory and Practice",* The Gleason Works, Rochester, New York 1990), sie werden aber auch in der EP 0 784 525 in ihrer Bedeutung diskutiert. Zwar wurden die auf einer solchen Basismaschine basierenden Nicht-Freiform-Maschinen älterer Bauart im Verlaufe der technischen Entwicklung so modifiziert, daß sie neben den erwähnten festen Achseneinstellungen, auch schon gewisse (Zusatz-)Bewegungen, wie Modifizierte Wälzung ('modified roll') und/oder Schraubvorschub ('helical motion') ermöglichten, in der EP 0 784 525 wird aber auch ausgeführt, warum. - zumindest aus dortiger Sicht- die Möglichkeiten zur. Oberflächengeomeirieoptimierung im Wege der Verwendung einer Basismaschine dennoch unzureichend sind.

Es wurden aber inzwischen auch Zahnradherstellungsmaschinen entwickelt, die die Anzahl der Maschinenachsen gegenüber einer Basismaschine auf das notwendige Maß verringern, um ein Werkzeug im Hinblick auf ein Werkstück so ausrichten zu können, daß ein Zahnrad hergestellt werden kann. Diese Maschinen weisen statt der für die Basis-Maschineneinstellungen notwendigen Achsen der Basismaschine Rotations-, Linear- und Schwenkachsen auf, um die notwendigen Positionierungsfreiheitsgrade zur Zahriradherstellung zu gewährleisten und werden auch Frei-Form-Maschinen genannt (vgl. hierzu ebenfalls die Ausführungen in der EP 0 784 525, ebenso wie die US 4 981 402). Üblicherweise weisen solche Frei-Form-Maschinen bis zu sechs Maschinenachsen und zwar vorzugsweise drei Linearachsen und drei Rotationsachsen auf, was eine deutliche mechanische Vereinfachung gegenüber einer auf dem Modell einer Basismaschine basierenden Nicht-Freiform-Maschine darstellt.

Derartige Frei-Form-Maschinen sind jedoch nicht nur mechanisch bedeutend einfacher als Nicht-Freiform-Maschinen aufgebaut, sondern bieten darüber hinaus noch einen weiteren grundsätzlichen Vorteil: Die Bearbeitung des Werkstücks ist hinsichtlich der dabei eröffneten Freiheitsgrade nicht mehr an die - historisch gewachsene - starre theoretische Bedeutung der Basis-Maschinenachsen für das Zahnrad gebunden, sondern ist prinzipiell völlig frei und ermöglicht so auch gegenüber den Basismaschinen die Generierung anspruchsvollerer Zahnradoberflächengeometrien, mit denen sich z.B. die eingangs erwähnten und gegenüber früheren Zeiten deutlich gestiegenen Anforderungen an die Zahnradlaufeigenschaften und - beanspruchung grundsätzlich erzielen lassen.

Auch für die Frei-Form-Maschinen existiert dabei ein theoretisches Modell, nämlich eine Frei-Form-Basismaschine mit höchstens 6-Achsen, die ein zu bearbeitendes Zahnrad und ein Werkzeug aufweist, welche jeweils um eine Achse drehbar sind, und das Werkzeug und das zu bearbeitende Zahnrad in Bezug aufeinander entlang oder um eine Mehrzahl von Achsen bewegbar, vorzugsweise verschiebbar oder drehbar sind.

Zur Terminologie ist damit das vorstehende zusammenfassend und für das nachfolgende noch einmal vorausschickend festzuhalten, daß hier in dieser Schrift jeweils mit

| | |
|---|---|
| **- Basismaschine:** | ein Modell von Nicht-Freiform-Maschinen, auf das alle denkbaren realen Nicht-Freiform-Maschinen bis auf Symmetrien umkehrbar eindeutig abgebildet werden können und bei der jede Maschinen-Achse eine verzahnungstheoretische Bedeutung hat, |
| **- Nicht-Freiform-Maschine:** | eine reale Maschine älterer Bauart, bei der eine Auswahl sogenannter Basis-Maschineneinstellungen der Basismaschine zur Verfügung steht, die jeweils eine theoretische Bedeutung für das herzustellende Zahnrad aufweisen, bei der aber nicht notwendigerweise alle Maschinen-Achsen der Basismaschine auch tatsächlich real vor- |

handen sein müssen,

**- Frei-Form-Basismaschine:** ein Modell von Frei-Form-Maschinen mit höchstens 6-Achsen, die ein zu bearbeitendes Zahnrad und ein Werkzeug aufweist, welche jeweils um eine Achse drehbar sind, und das Werkzeug und das zu bearbeitende Zahnrad in Bezug aufeinander entlang oder um eine Mehrzahl von Achsen bewegbar, vorzugsweise verschiebbar oder drehbar sind und auf das Frei-Form-Maschinen bis auf Symmetrien umkehrbar eindeutig abgebildet werden können, und mit

**- Frei-Form-Maschine** eine rale Maschine, welche statt der für die Basis-Maschineneinstellungen notwendigen Achsen der Basismaschine Rotations-, Linear- und Schwenkachsen aufweist, um die notwendigen Positionierungsfreiheitsgrade zur Zahnradherstellung zu gewährleisten, (wobei diese üblicher, aber nicht notwendigerweise bis zu sechs Maschinenachsen und zwar vorzugsweise drei Linearachsen und drei Rotationsachsen aufweisen),

bezeichnet wird. Insbesondere ist in diesem Zusammenhang darauf hinzuweisen, daß der Begriff Basismaschine nur im vorstehenden Sinne und nicht etwa als Oberbegriff (insbesondere auch nicht als Oberbegriff für Frei-Form-Basismaschine) gebraucht wird. Desweiteren wird hier und im Weiteren unter einer Abbildung zwischen Maschinen die Abbildung aller möglichen Bewegungen der einen Maschine auf Bewegungen der anderen verstanden, also nicht nur die Abbildung einer konkreten Realisierung eines Herstellungsverfahrens.

So ist es etwa aus dem Stand der Technik nach Krenzer (Krenzer, T., "Neue Verzahnungsgeometrie für Kegelräder durch Schleifen mit kegeligen Topfscheiben ['Flared Cup'-Verfahren]" in: Theodore J. Krenzer: CNC Bevel Gear Generators and Flared Cup Formate Gear Grinding. The Gleason Works, Rochester, New York, 1991) etwa der Einfluß grundsätzlich bekannt, der durch eine geeignete Ansteuerung der Achsen einer solchen Frei-Form-Maschine etwa auf die Tragbildverbesserung (eine die Laufeigenschaften eines Zahnrades wesentlich bestimmende Eigenschaft) eines Zahnrades genommen werden kann. Jedoch handelt es sich bei diesem Flared-Cup-Verfahren um ein reines Formverfahren, es wird ausgenutzt, daß das spezielle Werkzeug das Werkrad nur in einer Linie in Profilhöhenrichtung berührt. Dies ermöglichte es, die hier gegebenen einfachen monokausalen Zusammenhänge des Formgebungsprozesses im Hinblick auf die Auswirkung der jeweiligen Veränderung der Ansteuerung nur jeweils einer einzigen Achse gleichsam zu 'probieren'.

Der Stand der Technik nutzt diese grundsätzliche Erkenntnis denn auch aus, indem er diese zusätzlichen Freiheitsgrade zur Oberflächengeometriekorrektur von Kegel- oder Hypoidzahnrädern zu nutzen versucht, etwa mit dem Verfahren zur Herstellung von Zahnflankenmodifikationen nach der EP 0 784 525.

In der EP 0 784 525 wird ein Weg zur Zahnflankenmodifikation der hier in Rede stehenden Zahnräder vorgeschlagen. Allgemeiner gesprochen wird dort eine Methode zur Modifizierung der Oberflächengeometrie solcher Zahnräder dargelegt, bei der zunächst die von ihrem Wert her ursprünglich für den gesamten Herstellungsprozeß nur fix zu wählenden Basis-Maschineneinstellungen durch Basis-Maschineneinstellfunktionen ersetzt werden, womit sich während des Herstellungsprozesses des Zahnrades der Wert der Basis-Maschineneinstellung verändern kann, wodurch es nach den Ausführungen in dieser Schrift möglich sein soll, die Zahnflanke und damit die Oberflächengeometrie des Zahnrades zielgerichtet zu modifizieren. Dies soll dadurch vonstatten gehen, daß die vorstehend beschriebenen funktionalen Variationen auf der dortigen theoretischen Basismaschine mittels eines z.B. aus der US 4 981 402 bekannten Verfahrens auf eine Frei-Form-Maschine umgerechnet werden, die dann die tatsächliche Zahnraderzeugung vornimmt.

Diese Vorgehensweise bietet daher nach den Ausführungen in der EP 0 784 525 die Möglichkeit Zahnrad-Konstruktionsberechnungen und Überlegungen von theoretischer Bedeutung für das Zahnrad anzustellen, die auf dem theoretischen Basismaschinenmodell basieren, zugleich aber - ebenfalls nach der dortigen Darstellung - auch zusätzliche Freiheiten bei der Zahnrad-Entwicklung, indem alle Basis-Maschinenachsen, die zuvor nur fix (statisch) eingestellt werden konnten, als während des Herstellungsprozesses des Zahnrades funktional veränderliche (aktive) Einstellungen verwendet werden, was das o.a. Modell der Basismaschine und seine Transformation auf eine Frei-Form-Maschine ermöglichen soll.

Die nach der bereits zitierten Arbeit von Krenzer (s.o.), ohnehin nur auf das spezielle *"Flared Cup-Verfahren"* bezogenen, grundsätzlich gegebenen zusätzlichen Möglichkeiten der Frei-Form-Maschine zur Optimierung der Oberflächengeometrie eines Kegel- oder Hypoidzahnrades, sollen nach der EP 0 784 525 somit über den Umweg einer theoretischen Basismaschine mit während des Herstellungsprozesses funktional veränderlichen Basis-Maschineneinstellungen und ihrer nachfolgenden Transformation auf die Frei-Form-Maschine genutzt werden.

Diese Vorgehensweise weist jedoch den Nachteil auf, daß sie eine Vielzahl redundanter Steuerparameter zur Optimierung in Gestalt der Koeffizienten der die Achsbewegungen abbildenden Funktionen verwendet, da die theoretische Basismaschine stets mehr Achsen als die Frei-Form-Maschine aufweist. Dies führt dazu, daß sich die Optimierung aufgrund dieser Parameter infolge dieser Redundanzen unnötig schwierig ausgestaltet. So entstehen etwa im Falle der Verwendung von numerischen Optimierungsverfahren, die Jacobi-Matrizen verwenden, im Falle solcher redundanter Parameter regelmäßig lineare Abhängigkeiten, was zu singulären Jacobi-Matrizen führt, was, zu einer numerisch wesentlich schwieriger zu beherrschenden Optimierungsaufgabe führt (vgl. a. Nocedal, J. und Wright, S.J., "Numerical Optimization", Springer Series in Operations Research, New York, 1999), als sie sich auf der Grundlage regulärer Jacobi-Matrizen stellt, wie sie sich im Falle der Verwendung nicht redundanter Parameter ergeben.

Somit stellt sich diese Vorgehensweise angesichts der Bedeutung des Optimierungsverfahrens für Zahnräder, die der erwähnten Optimierung ihrer Oberflächengeometrie - etwa im Hinblick auf die bereits eingangs erwähnten heute deutlich erhöhten Anforderungen an die Laufeigenschaften - bedürfen als verbesserungswürdig dar; dies insbesondere auch deshalb, weil den ursprünglichen theoretischen Bedeutungen der Maschinenachsen im Hinblick auf diese Optimierung der Oberflächengeometrie keine solche Bedeutung mehr zukommt und somit hierauf zugunsten einer Optimierungsverbesserung verzichtet werden kann.

Zu einer solchen Verbesserung bedürfte es jedoch eines Verfahrens, welches es erlaubt, Optimierungen der Oberflächengeometrie von Kegel- oder Hypoidzahnrädern direkt auf der Frei-Form-Maschine, also insbesondere unter Ausschaltung von Umwegen über das Modell der Basismaschine vorzunehmen, um so die o.a. Nachteile zu vermeiden. Ein solches Verfahren ist bis heute nach dem Stand der Technik nicht bekannt.

Die bis heute nach dem Stand der Technik eingesetzten Verfahren beruhen vielmehr alle auf der Basismaschine mit ihren Basis-Maschineneinstellungen, die jeweils eine theoretische Bedeutung für das herzustellende Zahnrad aufweisen:

So werden etwa verzahnungstheoretische Erkenntnisse mit Untersuchungen durch Simulation, etwa des Einflusses der Parameter auf die Flankenform oder den EaseOff (vgl. a. Wiener, D., *"Örtliche 3D-Flankenkorrekturen zur Optimierung spiralverzahnter Kegelräder"* in: Seminarunterlagen *"Innovationen rund ums Keielrad"*, WZL, RWTH Aachen 2001, aber auch Stadtfeld, H.J., "The Universal Motion Concept for Bevel Gear Production", in: Proceedings of the 4th World Congress on Gearing and Power Transmission, Band 1, Paris 1999, S. 595-607) oder etwa des Einflusses auf Lastkontakteigenschaften (vgl. a. Simon, V., "Optimal Machine Tool Setting for Hypoid Gears Improving Load Distribution", ASME Journal of Mechanical Design 123, Dezember 2001, S. 577-582) kombiniert, um geeignete Algorithmen für die Gestaltung der Zahnradoberflächengeometrie abzuleiten.

Auch wird nach dem Stand der' Technik (vgl. etwa Gosselin, C.; Guertin, T.; Remond, D. und Jean, Y., "Simulation and Experimental Measurement of the Transmission Error of Real Hypoid Gears Under Load". ASME Journal of Mechanical Design Vol. 122 March 2000 bzw. Gosselin, C.; Masseth, J. und Noga, S., "Stock Distribution Optimization in Fixed Setting Hypoid Pinions". Gear Technology July/August 2001) ein Newton-Raphson-Verfahren dazu eingesetzt, um Flankenkorrekturen bzw. spezielle Flankenanpassungen, mithin also Zahnradgeometriemodifikationen oder -optimierungen durchzuführen. Jedoch werden bei dieser sensitivitätsbasierten Optimierung nur die festen Basis-Maschineneinstellungen variiert, um Flankenformmodifikationen höchstens 2. Ordnung zu erzielen.

Als die wohl neueste Entwicklung auf dem Gebiet der Anwendung moderner Optimierungstechniken zur Zahnradoptimierung, ist die Publikation *"Automatisches Differenzieren im Maschinenbau - Simulation und Optimierung bogenverzahnter Kegelradgetriebe"von* O. Vogel et al. (Vogel, O., Griewank, A., Henlich, T. und Schlecht, T., "Automatisches Differenzieren im Maschinenbau - Simulation und Optimierung bogenverzahnter Kegelradgetriebe", in: Tagungsband "Dresdner Maschinenelemente Kolloquium - DMK2003", TU Dresden 2003, S. 177-194) zu nennen.

Wie bereits erwähnt, beziehen sich alle vorgenannten Verfahren jedoch immer auf die Ansteuerung der Basismaschine mit ihren Basis-Maschineneinstellungen und ihren jeweiligen verzahnungstheoretischen Bedeutungen. Dies ist vor dem technisch-historischen Hintergrund der Vorgehensweise der Zahnräder auslegenden Ingenieure zu erklären, die hierbei auf genau diese Größen mit zahnradtheoretischer Bedeutung abstellen. Eine solche Vorgehensweise ist für die Grundauslegung von Zahnrädern, also solchen Zahnrädern, die keine Modifikationen ihrer Geometrie gegenüber den hiermit erzielbaren Grundformen aufweisen, auch durchaus nützlich, da hierbei einerseits der der Vorstellungswelt des Fachmanns entstammende theoretische Zusammenhang bestehen bleibt, andererseits hierbei die o.a. Nachteile nicht auftreten.

Für den Einsatz der numerischen Optimierungsmethoden ist diese verzahnungstheoretische Bedeutung jedoch entgegen der nach dem Stand der Technik vertretenen Auffassung . (vgl. u.a. EP 0 784 525 B1, dort etwa Absatz-Nr. [0016] und [0023]) letztlich völlig irrelevant; dies auch schon deshalb, weil aus dem Resultat einer etwaigen auf einer Frei-Form-Basismaschine erfolgenden Optimierung bereits wegen der Vielzahl von Parametern durch den Fachmann nicht mehr darauf geschlossen werden kann, was infolge dieser Parameter wirklich im Herstellungsprozeß vor sich geht. Ein verzahnungstheoretischer Bezug des verwendeten Maschinenmodells ist daher bereits aus diesem Grund belanglos.

Es ist daher Aufgabe der vorliegenden Erfindung ein Verfahren und eine Vorrichtung zu seiner Ausführung anzugeben, welche es erlauben Optimierungen der Oberflächengeometrie von Kegel- oder Hypoidzahnrädern direkt auf der Frei-Form-Basismaschine, also insbesondere unter Ausschaltung von Umwegen über das Modell der Basismaschine vorzunehmen, die dann direkt auf eine reale Frei-Form-Maschine zum Zwecke der Herstellung oder Korrektur von Kegel- oder Hypoidzahnrädern abgebildet werden können.

Diese Aufgabe wird erfindungsgemäß gelöst durch ein Verfahren nach Anspruch 1, durch eine Vorrichtung nach Anspruch 37 und durch ein Computerprogramm nach Anspruch 40.

Dabei meint die Aussage, daß die Frei-Form-Maschine auf eine Frei-Form-Basismaschine mit höchstens 6-Achsen umkehrbar eindeutig abbildbar ist, daß die Abbildung der Frei-Form-Basismaschine auf die Frei-Form-Maschine eindeutig ist.

Ferner wird diese Aufgabe durch ein Computersystem zur Optimierung der Oberflächengeometrie von Kegel- oder Hypoidzahnrädern mit mindestens einer Datenverarbeitungseinheit und mindestens einem Speicher gelöst, das dadurch erfindungsgemäß gekennzeichnet ist, daß die Datenverarbeitungseinheit programmtechnisch so eingerichtet ist, daß sie nach dem Verfahren nach der vorliegenden Erfindung arbeitet.

Durch die vorliegende Erfindung wird somit auch die bisherige Fehlvorstellung überwunden, eine Oberflächengeometrieoptimierung, insbesondere eine Zahnflankengeometriemodifikation der hier in Rede stehenden Zahnräder sei nur im Wege eines Verfahrens zu bewältigen, das auf der Basismaschine und nicht auf der Frei-Form-Basismaschine operiert, da es der verzahnungstheoretischen Bedeutung der einzelnen Maschinenachsen bedürfe.

In einer besonders bevorzugten Ausfuhruhgsform nach der vorliegenden Erfindung, wo die

Frei-Form-Maschine auf eine Frei-Form-Basismaschine mit höchstens 6-Achsen bis auf Symmetrien eineindeutig (bijektiv) abbildbar ist und Frei-Form-Maschine und Frei-Form-Basismaschine in Achsenart und Achsenanordnung einander entsprechen, ergibt sich zudem der Vorteil, daß auf der Grundlage der Frei-Form-Basismaschine für die Frei-Form-Maschine eine direkte Fehlerursachenanalyse durchgeführt werden kann. So kann etwa der Einfluss von typischen Achsenfehlern wie etwa Schwingungen auf die Zahnradgeometrie durch Simulation untersucht werden, in dem derartige Fehler bei der funktionalen Modellierung der Achsenbewegungen berücksichtigt werden. Darüber hinaus kann sogar mit Hilfe der nach der vorliegenden Erfindung durchgeführten Optimierung von durch Maschinenfehler bedingten Abweichungen in der erzeugten Flankengeometrie auf die verursachenden Achsenbewegungen zurückgerechnet werden. Mit anderen Worten, durch typische Achsenfehler auftretende Abweichungen in der Zahngeometrie können eindeutig den verursachenden Maschinenachsen zugeordnet werden, was unter Produktionsgesichtspunkten - etwa im, Hinblick auf die Qualitätssicherung - erhebliche Vorteile birgt.

Die Verwendung der (herkömmlichen) Basismaschine für Zwecke der Simulation und Optimierung lässt eine solche Vorgehensweise nicht zu, da erstens typische Achsenfehler der Frei-Form-Maschine wegen der Redundanzen nicht eindeutig den Achsen der Basismaschine zugeordnet werden können und zweitens wegen der Abweichung in Achsenart und Achsenanordnung der mögliche Fehler einer Achse der Frei-Form-Maschine durch komplexe Bewegungen mehrerer Achsen der Basismaschine repräsentiert werden muss, die entsprechend kompliziert modelliert werden müssten. Außerdem müsste eine gegebenenfalls so bestimmte Fehlerursache im Modell der Basismaschine noch auf das Modell der Frei-Form-Maschine transformiert werden.

Es soll auch betont werden, daß die hier nach der vorliegenden Erfindung vorgenommene Optimierung sowohl der erstmaligen optimierten Fertigung von Zahnrädern, als auch der nachträglichen Korrektur bereits gefertigter Zahnräder zu dienen vermag. Insbesondere im letzten Fall ist es dabei gleichgültig, ob die erste Fertigung ohne Optimierung, mittels der Optimierung nach der hier vorliegenden Erfindung oder auch mittels einer anderen Optimierung erfolgte.

Vorzugsweise ist das erfindungsgemäße Verfahren zur Optimierung der Oberflächengeometrie oder einer hiervon abhängigen Größe oder hiervon abhängigen Größen von Kegel- oder Hypoidzahnrädern so ausgestaltet, daß die Optimierung des Steuerparameters oder der Steuerparameter für eine Frei-Form-Basismaschine mit 6 Achsen, vorzugsweise drei Drehachsen (A, B, C) und drei Linearachsen (X, Y, Z) erfolgt, wobei dies vorzugsweise sind:

| | | |
|---|---|---|
| Die | A-Achse | zur Werkzeugdrehung, |
| die | B-Achse | zur Drehung des herzustellenden Zahnrades, |
| die | C-Achse | als Drehachse zu Einstellung des Winkels zwischen A- und B-Achse oder zwischen B-Achse und Werkzeugspitzenebene, |
| die | X-Achse | als Linearachse in Richtung A-Achse, |
| die | Y-Achse | als Linearachse, die mit X- und Z-Achse ein Rechtssystem bildet, |
| und die | Z-Achse | als Linearachse in Richtung Gemeinlot von A- und B-Achse. |

Eine (theoretische) Frei-Form-Basismaschine mit 6-Achsen stellt zur Freiformoptimierung alle 6 Bewegungs-Freiheitsgrade zur Verfügung, um die Freiheiten moderner Frei-Form-Maschinen nutzen zu können. Sie stellt damit ein Modell zur Verfügung, das alle erdenklichen Freiheitsgrade zur Positionierung von Werkstück und Werkzeug in Bezug aufeinander ermöglicht, gleichzeitig heirzu aber sowenig Maschinenachsen wie möglich voraussetzt. Die vorstehend beschriebenen je 3 Linear- und 3 Drehachsen haben sich dabei in der Praxis als besonders praktikabel erwiesen.

Die Achsbewegungen verhalten sich dabei zur Erläuterung ihres grundsätzlichen Zusammenspiels vorzugsweise etwa wie folgt:

Das Werkzeug (A-Achse) dreht sich unabhängig mit dem Drehwinkel *a*. Die Bewegung aller anderen Achsen ist an die abstrakte Führungsgröße *t* gekoppelt. Diese Führungsgröße *t* durchläuft ein Intervall $[t_1, t_2]$ mit $t_1 \leq t_2$. Im Falle von kontinuierlich teilenden Verfahren hängt die Werkraddrehung (B-Achse), also die Drehung des herzustellenden Zahnrades ebenfalls vom Werkzeugdrehwinkel *a* ab, wobei die Modellierung dieser Teilbewegung $b_r(a)$ hier nicht näher betrachtet werden soll.

Die funktionalen Abhängigkeiten der einzelnen Achsen lauten dabei - zur nochmaligen Verdeutlichung - explizit etwa wie folgt:

| A-Achse: | $a$ | X-Achse: | $x(t)$ |
|---|---|---|---|
| B-Achse: | $\tilde{b}(t,a) = b(t) + b_T(a)$ | Y-Achse: | $y(t)$ |
| C-Achse:. | $c(t)$ | Z-Achse: | $z(t)$ |

Die Darstellung-der Abhängigkeit von *t* und *a* wurde hier an die heute existierenden Verfahren zur Kegelradherstellung angelehnt. Für Wälzverfahren ist die Führungsgröße *t* eine weitere unabhängige Größe. Um Formverfahren in dem Modell darzustellen, kann t als eine von von *a* abhängige Größe aufgefasst werden, etwa $t(a) = a$.

Grundsätzlich ist es auch denkbar, neben der Bewegung der B-Achse ebenfalls die Bewegung weiterer Achsen an die A-Achse zu koppeln. Praktisch scheint das jedoch eher problematisch, da den jetzigen Achsen dann relativ hochfrequente periodische Schwingungen überlagert werden müssten.

Es ist aber insbesondere im Hinblick auf die mittels von Maschinensteuerparametern zu beeinflussenden Achsbewegungen grundsätzlich zu beachten, daß bei dem erfindungsgemäßen Verfahren zur Optimierung der Oberflächengeometrie von Kegel- oder Hypoidzahnrädern als Steuerparameter nicht nur Maschinensteuerparameter, sondern auch Werkzeugeinstellparameter dienen können. Dabei kann auch ein fest am oder im Werkzeug vorgesehener Eingriffswinkel, der etwa beim Messerschleifen erzeugt wird, ein solcher Werkzeugeinstellparameter sein, und zwar ebenso wie solche Parameter die bei der Einstellung des Messerkopfs verändert werden können.

Jedoch betrifft eine besonders bevorzugte Ausführungsform des Verfahrens nach der vorliegenden Erfindung eine solche, bei der als Steuerparameter zumindest auch zumindest ein Maschinensteuerparameter zur Ansteuerung von mindestens einer Maschinenachse dient, wobei im Hinblick auf die Ansteuerung zu bedenken ist, daß hier im Rahmen der Optimierung zunächst die Achse der der Simulation dienenden Frei-Form-Basismaschine, also eines Simulationsmodells angesteuert wird.

Prinzipiell kann die funktionale Abhängigkeit der Bewegung einer Achse von der Führungsgröße t durch eine beliebige stetige (i. d. R. stetig differenzierbare) Funktion beschrieben sein. Hierbei ist insbesondere auch die konstante Funktion zulässig, um eine '*feste*' Achse zu beschreiben. Auch stückweise (abschnitts- oder intervallweise) definierte Funktionen wie im weiteren noch zu sehen sein wird - kommen hier in Frage, etwa im Wege der Verwendung von Splines.

In Hinblick auf die hier angestrebte Optimierung muss eine solche Funktion jedoch mit Parametern versehen sein, die zur Gestaltung des funktionalen Zusammenhangs herangezogen werden können. Daher soll $v_j(t)$ (in Abhän-gigkeit von t) stellvertretend für jeweils eine der Funktionen $b(t)$, $c(t)$, $x(t)$, $y(t)$, $z(t)$ stehen, die die von *t* abhängigen Achsen B, C, X, Y und Z (s.o.) betreffen. Entsprechend wird von der v-Achse gesprochen.

Die Bewegung einer Achse wird also letztlich durch die Werte der Parameter der ihr zugeordneten von t abhängigen Funktion festgelegt. Um die Abhängigkeit von diesen Parametern auszudrücken, wird z. B. für die v-Achse anstelle von $v_j(t)$ die Funktion $v_j(t,P_j)$ geschrieben, wobei $P_j$ der Vektor der Parameter der Funktion der Achse *j* ist.

Vorzugsweise erfolgt also die Optimierung durch Variation des Steuerparameters oder der Steuerparameter für eine solche Frei-Form-Basismaschine, deren Achsbewegungen untereinander vermittels zumindest einer, vorzugsweise stetigen, besonders bevorzugterweise stetig differenzierbaren mathematischen Funktion zur Achsansteuerung $v_j (t, P_j)$- vorzugsweise zur Ansteuerung der Maschinenachse Nr.*j*- synchronisiert werden, wobei eine der Maschinenachsen selbst oder eine virtuelle Achse dabei eine Führungsgröße t generiert und so als Leitachse zumindest der Positionierung der anderen Achsen dient, die von dieser Führungsgröße t und den in einem der jeweiligen Funktion zugeordneten Parametervektor $P_j$ enthaltenen Parametern funktional abhängen und als Steuerparameter zumindest auch ein Parameter $P_{ji}$ aus dem Parametervektor $P_j$ zumindest einer der die Achsbewegungen synchronisierenden mathematischen Funktionen $v_j$ verwendet wird.

Unter einer virtuellen Achse wird dabei eine Leitachse für andere Achsen verstanden, die diese anderen Achsen synchronisieren soll, selbst jedoch keiner mechanischen Achse im Modell der Frei-Form-Basismaschine entspricht und auch nicht der unmittelbaren Ansteuerung einer oder mehrerer mechanischer Achsen in diesem Modell dient.

Die Synchronisation der Achsbewegungen kann auch vermittels mehrerer abschnittsweise unterschiedlicher mathematischer Funktionen erfolgen, wobei die Abschnitte durch Intervalle von t, etwa als $[t_m, t_n]$ mit $t_n > t_m$ gegeben sind.

Eine besonders bevorzugte Ausführungsform des Verfahren zur Optimierung der Oberflächengeometrie oder hiervon abhängiger Größen von Kegel- oder Hypoidzahnrädern nach der vorliegenden Erfindung ist dabei dadurch gekennzeichnet, daß die Synchronisation der Achsbewegungen vermittels additiv überlagerter mathematischer Funktionen erfolgt, wobei die Überlagerung besonders vorzugsweise von der Form

$$v_j(t, P_j) = v_j^1(t, P_j^1) + v_j^2(t, P_j^2) + \ldots + v_j^l(t, P_j^l)$$

mit $1 \geq 1$ ist. Hier bei handelt es sich um ein hybrides Modell aus additiv überlagerten Teilmodellen, wobei der verwendete Ansatz für die Bewegungen der einzelnen Achsen innerhalb eines Teilmodells dabei jeweils gleich sein soll.

Mit Hilfe einer derartigen hybriden Modellgestaltung kann bei der Freiformoptimierung nach der vorliegenden Erfindung je nach Zielstellung oder Optimierungsstrategie auf ein *'zugeschnittenes'* Teilmodell gesprungen werden. Ggf. können hiernach ausgehend von einem Startmodell Teilmodelle nach und nach hinzugenommen werden. So kann etwa ein polynominaler Ansatz mit einem Spline-Ansatz gemischt werden (vgl. hierzu a. Müller, H., Wiener, D. und Dutschk, R., "A Modular Approach Computing Spiral Bevel Gears and Curvic Couplings", in: Proceedings of the 4th World Congress on Gearing and Power Transmission, Band 1, Paris 1999, S. 531-540).

Als mathematische Funktion $v_j$ zur Achsbewegungssynchronisation kann vorzugsweise zumindest auch ein Polynom beliebiger, vorzugsweise sechster Ordnung verwendet werden, wobei als Steuerparameter die jeweiligen Koeffizienten $p_{ji}$ des Polynoms $v_j$ dienen.

Hierbei handelt es sich um den wohl gebräuchlichsten Ansatz, wie er typischerweise auch bei konventionellen Maschinenmodellen mit Zusatzbewegungen nach dem Stand der Technik genutzt wird.

Er ist prinzipiell gut zur Erzielung globaler Optimierungseffekte in der Oberflächengeometrie des Zahnrades geeignet, wie etwa der Modifikation von Flankenwinkel, Spiralwinkel oder auch der Längsballigkeit.

In einer weiteren bevorzugten Ausführungsform des Verfahren zur Optimierung der Oberflächengeometrie oder einer hiervon abhängigen Größe oder hiervon abhängigen Größen von Kegel- oder Hypoidzahnrädern nach der vorliegenden Erfindung wird als mathematische Funktion $v_j$ zur Achsbewegungssynchronisation zumindest auch eine auf Tschebyscheffpolynomen als Basisfunktionen basierende Reihenentwicklung verwendet, vorzugsweise in einem Intervall $[t_1, t_2]$ mit $t_1 > t_2$ mit einer Funktion der Form

$$v_j(t, P_j) = p_{j_0} + p_{j_1} T_1(\widetilde{t}) + p_{j_2} T_2(\widetilde{t}) + \ldots + p_{j_i} T_i(\widetilde{t}) + \ldots + p_{j_{d_v}} T_{d_v}(\widetilde{t})$$

mit $P_j = (p_{j_0}, p_{j_1}, p_{j_2}, \cdots p_{j_i}, \cdots, p_{j_{d_v}})$ und $i = 1, \ldots, d_v$, sowie $\widetilde{t} = 2 \dfrac{t - t_1}{t_2 - t_1} - 1$ verwendet, wobei $T_i$ jeweils ein Tschebyscheff-Polynom darstellt und als Steuerparameter die jeweiligen Koeffizienten $p_{ji}$ der Reihe $v_j$ verwendet werden.

Tschebyscheff-Polynome eignen sich z. B. sehr gut, um Transformationen von einem Basismaschinenmodell in eine von deren Basis-Maschineneinstellungen mit ihrer jeweiligen theoretischen Bedeutung für die Zahnradgeometrie lösgelöste Darstellung der Frei-Form-Maschine, vorzugsweise der 6-Achsen-Maschine mit ausreichender Genauigkeit vornehmen zu können, was für den Fall einer Grundauslegung eines Zahnrades, dessen Oberflächengeometrie danach noch optimiert werden soll nützlich ist.

Außerdem sind in Hinblick auf eine gute numerische Lösbarkeit der Optimierungsprobleme die Tschebyscheff-Polynome als Basisfunktionen gegenüber der monomialen Basis bei den üblicherweise verwendeten (Taylor-) Polynomen vorzuziehen. Die Verwendung der monomialen Basis führt mit wachsender Ordnung zu nahezu singulären und schlecht konditionierten Jacobimatrizen, welche die numerische Lösbarkeit verschlechtern. Dieser Effekt wird durch die Orthogonalität der Tschebyscheff-Polynome vermieden.

Weiterhin kann als mathematische Funktion $v_j$ zur Achsbewegungssynchronisation zumindest etwa auch eine Splinefunktion, die aus stetig ineinander übergehenden Polynomen, vorzugsweise dritten Grades gebildet ist und als Steuerparameter die jeweiligen Splinekoeffizienten verwendet werden (vgl. hierzu a. Bronstein, I.N., Semendjajew, K.A., Musiol, G. und Mühlig, G., "Taschenbuch der Mathematik", 5. Aufl., Frankfurt a.M. 2001, S. 955-960; sowie Golub, G. und Ortega, J. M.; "Scientific Computing - Eine Einführung in das wissenschaftliche Rechnen und Parallele Numerik", Stuttgart 1996).

Die Verwendung solcher Splines, vorzugsweise kubischer Splines, ist insbesondere gut zur Erzielung lokaler Optimierungseffekte in der Oberflächengeometrie des Zahnrades geeignet.

An dieser Stelle sei auch darauf hingewiesen, daß für Zwecke der Fehlerursachenanalyse die Achsenbewegungen um spezielle Teilmodelle ergänzt werden können (vgl. oben zur additiven Überlagerung verschiedener Funktionen $\boldsymbol{v}_j^t$ zu einer Achsfunktion $v_j$.) So kann etwa als Funktion $\boldsymbol{v}_j^t$ zur Achsbewegungsynchronisation auch eine abgebrochene trigonometrische Reihe (Fourier-Reihe) verwendet werden, wobei die Fourierkoeffizienten, aber auch die Periode als Steuerparameter dienen.

Eine weitere Ausführungsform des erfindungsgemäßen Verfahrens zeichnet sich dadurch aus, daß die Optimierung der Oberflächengeometrie oder einer hiervon abhängigen Größe oder hiervon abhängigen Größen des Kegel- oder Hypoidzahnrades dadurch erfolgt, daß der oder die Steuerparameter, welcher oder welche einen Einfluß auf die Oberflächengeometrie oder die hiervon abhängige Größe oder Größen des Kegel- oder Hypoidzahnrades hat oder haben, mittels eines numerischen Optimierungsverfahrens solange variiert wird oder werden, bis hierdurch die Oberflächengeometrie oder die hiervon abhängige Größe des Kegel- oder Hypoidzahnrades zumindest einem vorgegebenen Zielmaß entspricht.

Grundsätzlich ist zum numerischen Optimierungsverfahren zunächst folgendes zu bemerken: Jedes Optimierungsproblem kann etwa in die nachfolgende Form gebracht werden:

Eine Zielfunktion, die es zu minimieren gilt: f(p) → min!, wobei zugleich gilt:

G(p) < = 0      (Ungleichungsnebehbedingungen)
und H(p) = 0      (Gleichungsnebenbedingungen)
sowie 1 < = p < = u    (Beschränkungen auf den Parametern)

p sind hierbei die Parameter.

Details insbesondere zu den hier angesprochenen numerischen Optimierungsverfahren finden sich bei J. Nocedal, und S. J. Wright (vgl. a. Nocedal, J. und Wright, S.J., "Numerical Optimization", Springer Series in Operations Research, New York, 1999. Vorliegend liegen i.dR. Probleme der nichtlinearen Optimierung mit Nebenbedingungen vor; es müssen daher auch entsprechende, Verfahren angewendet werden, etwa ein SQP-Verfahren.

Im Detail kann die numerische Optimierung dabei vorzugsweise wie folgt erfolgen:

Die zu optimierenden Designgrößen, also Oberflächengeometrie oder hiervon abhängige Größe Größen des jeweiligen Kegel- oder Hypoidzahnrades lassen sich durch Simulationsberechungen auf der Grundlage etwa eines 6-Achsenmodells bestimmen, wie im weiteren noch dargelegt ist.

Hierbei besteht eine direkte funktionale Abhängigkeit zwischen den Modellparametern (Siehe auch Fig. 6 dieser Schrift hier, aus der hervorgeht welche Größen wovon abhängen) und den Designgrößen, also den zu optimierenden Größen. Diese Abhängigkeit ist durch das Simulationsverfahren (vorzugsweise vorliegend als Computerprogramm) unmittelbar festgelegt/gegeben und läßt sich quantitativ in Form von Sensitivitäten berechnen Diese können mittels dividierter Differenzen als einfaches, aber nicht bestes Mittel oder durch automatisches Differenzieren (AD) bestimmt werden, was nachfolgend noch näher erläutert wird.

Die Sensitivitäten beschreiben, welchen Einfluß jeder einzelne Parameter auf jede der Zielgrößen im linearisierten Modell hat. Aus mathematischer Sicht sind dies die Ableitungen der Ausgangsgrößen (Designgrößen) der Simulationsrechnung bezüglich der Eingangsgrößen (Parameter). Diese sind für die gezielte Optimierung mittels moderner numerischer Methoden notwendig.

Um eine sinnvolle Optimierung nach der vorliegenden Erfindung durchzuführen, sollte die Zielstellung mathematisch in Form eines (i.d.R.) nichtlinearen Optimierungsproblems gefasst werden. Dazu müssen erstens alle interessierenden Designgrößen (zu optimierende Größen) mathematisch gefaßt werden, d. h. z. B. daß Kurven und Flächen geeignet pärametrisiert werden müssen oder z. B. Tragbilder in geeigneter Form quantitativ erfasst werden müssen. Zweitens müssen für die gleichzeitig betrachteten Designgrößen vorzugsweise Zielgrößeri in Form von Zielfunktion mit Nebenbedingungen festgelegt werden. Die Nebenbedingungen können dabei Gleichungsnebenbedingungen als auch Ungleichungsnebenbedingungen förmuliert sein.

Ein Beispiel mag dies verdeutlichen: Es soll eine Optimierung der Flankenform der Zahnflanken unter Beibehaltung der Zahndicke erfolgen. Dabei kann die Abweichung der Flankenform von einer Wunschflankenform durch die Summe der Quadrate der Abweichungen auf einem Gitter quantifiziert werden. Diese Größe wird dann als Zielfunktion minimiert, wobei etwa die konstante Zahndicke als Gleichungsnebenbedingung betrachtet wird, die z. B. als Strafterm in die Zielfunktion integriert werden kann.

Ebenso kann auch die Gestaltung des EaseOff unter Berücksichtigung einer oberen Schranke für den maximalen Wälzfehler als Optimierungsziel genutzt werden. Den weiteren Ausführungen sind weitere geeignete Optimierurigsziele dargelegt.

Auf diese Weise führt das Optimierungsverfahren nach der vorliegenden Erfindung durch geeignete Formulierung von sinnvollen Optimierungsproblemen zu technisch vernünftigen Ergebnisse, d.h. zu technisch wunschgemäß gestalteten Zahnrädern.

D.h. erstens kann das Zieldesign natürlich nur dann exakt erreicht werden, wenn es nicht zu weit weg vom Ausgangsdesign liegt - vorzugsweise soll nur lokal optimiert werden - und wenn es tatsächlich überhaupt realisierbar ist. Ansonsten erhält man nach dem erfindungsgemäßen Verfahren dennoch zumindest eine möglichst gute Näherung an das erstrebte Ziel, wobei im Falle lokaler Optimierungsverfahren nicht verschwiegen werden soll, daß hier gelegentlich die Gefahr des Erreichens eines nur lokalen Optimums besteht.

Zweitens heißt sinnvoll auch, dass durch Nebenbedingungen technisch sinnlose Lösungen ausgeschlossen werden müssen! So reicht es etwa nicht aus eine Zielflankenform zu definieren und bezüglich dieser zu optimieren, gleichzeitig aber der Zahndicke oder Zahntiefe keine Beachtung zu schenken.

Dabei kann als numerisches Optimierungsverfahren ein ableitungsbasiertes Verfahren verwendet werden, wobei zur Berechnung der Ableitungen (Sensitivitäten) etwa ein Differenzen-Quotienten-Verfahren verwendet werden kann, das deshalb recht rechenintesiv und ggf. ungenau ist. Vorzugsweise wird hierzu jedoch die Methode des automatischen Differenzierens eingesetzt, die wesentlich effizienter ist (vgl. hierzu auch Griewank (Griewank, *A., "Evaluating Derivatives. Principles an Techniques of Algorithmic Differentiation",* Philadelphia, SIAM, 1999); sowie Vogel, O., Griewank, A., Henlich, T. und Schlecht, T., "Automatisches Differerizieren im Maschinenbau - Simulation und Optimierung bogenverzahnter Kegelradgetriebe", in: Tagungsband "Dresdner Maschinenelemente Kolloquium - DMK2003", TU Dresden 2003, S. 177-194; aber auch Vogel, O, "Accurate Gear Tooth Contact and Sensitivity Computation for Hypoid Bevel Gears", in: Corliss, G.; Faure, C.; Griewank, A., Hascoët, L. und Naumann, U. (Hrsg), "Automatic Differentiation of Algoithms - From Simulation to Optimization", New York 2002. Hierbei macht man sich zunutze, daß die zu differenzierende Funktion aus elementaren arithmetischen Operationen und Funktionen besteht, deren Ableitungen für sich genommen einfach zu berechnen sind. Die Ableitung im Ganzen wird dann parallel zur Auswertung der Funktion selbst im Wege der Anwendung der Ableitungsregeln berechnet. Auf diese Weise erhält man eine - abgesehen von Rundungsfehlern - genaue Ableitung. Vgl. a. Preuß et al. (Preuß, W.; Wenisch, G., "Numerische Mathematik", München, Wien 2001, S. 234).

Nach dem Verfahren zur Optimierung der Oberflächengeometrie oder einer hiervon abhängigen Größe oder hiervon abhängigen Größen von Kegel- oder Hypoidzahnrädern nach der vorliegenden Erfindung erfolgt die Optimierung der Oberflächengeometrie zumindest auch

- anhand der Form der Zahnflanken, etwa auch einschließlich des Zahnradfußes, wobei dies vorzugsweise dadurch geschieht, daß das Verfahren der kleinsten Fehlerquadrate auf die Abweichungen von einer vorgegebenen geometrischen Sollstruktur der Zahnflankengeometrie, vorzugsweise bezogen auf ein 2-dimensionales Gitter, angewendet wird, um zu bestimmen, ob die Form der Zahnflanke dem vorgegebenen Zielmaß entspricht,
  (Anmerkung: Unter 'Verfahren der kleinsten Fehlerquadrate soll hier und im nachfolgenden verstanden werden, daß die Summe der jeweiligen Fehlerquadrate als das - vorzugsweise zu minimierende - Zielmaß der Optimierung Verwendung finden soll; aiehe hierzu auch Nocedal und Wright (Nocedal, J.; Wright, S.J., "Numerical Optimization", Springer Series in Operations Research, New York, 1999.), wobei dies Dokument durch Inbezugnahme mit in den Offenbarungsgehalt der Schrift hier einbezogen wird.

- anhand der Zahndicke und Zahnhöhe,

- anhand der EaseOff-Topographie, wobei dies vorzugsweise dadurch geschieht, daß das Verfahren der kleinsten Fehlerquadrate auf die Abweichungen von einer vorgegebenen EaseOff-Topographie, vorzugsweise bezogen auf ein 2-dimensionales Gitter, angewendet wird, um zu bestimmen, ob die EaseOff-Topographie dem vorgegebenen Zielmaß entspricht,

- auch anhand des Wälzfehlers, wobei dies vorzugsweise, dadurch geschieht, daß der Wälzfehler auf einen vorgegebenen Maximalwert hin überwacht wird, oder aber das Verfahren der kleinsten Fehlerquadrate auf die Abweichungen von einer vorgegebenen Wälzfehlerfunktion, vorzugsweise bezogen auf ein 1-dimensionales Gitter, angewendet wird, um zu bestimmen, ob der Wälzfehler dem vorgegebenen Zielmaß entspricht,

- auch anhand der Tragbildlage, wobei dies vorzugsweise dadurch geschieht, daß das Verfahren der kleinsten Fehlerquadrate auf die Abweichungen der Form und/oder der Mittelpunktslage des tatsächlichen Tragbildes von einem als Höhenlinie in einer um den Wälzfehler bereinigten EaseOff-Topographie vorgegebenen Tragbild, vorzugsweise bezogen auf ein 1-dimensionales Gitter, dazu eingesetzt wird, um zu bestimmen, ob das Tragbild dem-vorgegebenen Zielmaß entspricht oder aber das Verfahren der Ellipsen-Approximation hierzu verwendet wird,

- anhand des Verlaufes des Kontaktweges,

- anhand des Flanken-und Kopfspiels, und/oder

- anhand der von der Oberflächengeometrie abhängigen Spannungen oder Pressungen

Vorzugsweise gehört zur Spezifikation des Optimierungsproblems auch die Wahl der Steuerparameter (Parameter), was auch die Wahl vorzugsweise eines, aber auch mehrerer Teilmodelle umfassen kann (vgl. hierzu oben die Ausführungen zur Synchronisation der Achsbewegungen vermittels additiv überlagerter mathematischer Funktionen).
Weitere Möglichkeiten der Optimierung - auch hinsichtlich global orientierter Optimierungsstrategien - eröffnen sich durch die Möglichkeit der Verwendung sogenannter genetischer Algorithmen.
Diese arbeiten i.a. auf der Basis einer zufälligen Anfangsauswahl einer Menge von Steuerparametern, einer sogenannten Population, deren Elemente jeweils einem sogenannten Fitness-Test unterzogen werden, d.h. einem Test ob ein Parametervektor der Element dieser Menge ist zu einem dem Optimierungsziel führenden Ergebnis führt.
Ist noch kein solcher gefunden, so wird die Menge einem probabilistischen Prozeß von sogenannter genetischer Reproduktion und sogenanntem genetischen Crossover unterworfen, die zu neuen Parametervektoren führen, die der Menge hinzugefügt werden. Bisherige Elemente der Population können dabei auch entfallen. Auf diese Weise entsteht eine neue sogenannte Populationsgeneration, die wiederum dem eingangs erwähnten Test unterzogen werden kann, ob etwa eines ihrer Mitglieder, also hier ein Steuerparametervektor, fit' genug ist, um das gestellte Optimierungsproblem zu lösen. Zur näheren Ausgestaltung dieser nach dem Stand der Technik bekannten Verfahren sei exemplarisch auf John R. Koza, "Genetic Programming" verwiesen (Koza, John A., "Genetic Programming", MIT, Cambridge, Mass., USA 1992, zum Prinzip des 'Genetic Programming' insbesondere S. 76f.)
Eine bevorzugte Ausführungsform des erfindungsgemäßen Verfahrens zur Optimierung der Oberflächengeometrie oder einer hiervon abhängigen Größe oder hiervon abhängigen Größen von Kegel- oder Hypoidzahnrädern ist, dadurch gekennzeichnet, daß die Simulation des Herstellungsprozesses mittels einer Durchdringungsrechnung erfolgt (vgl. hierzu Beulker, K., *"Berechnung der Kegelradzahngeometrie",* FVA-Heft 301, Forschungsgemeinschaft Antriebstechnik e.V., 1997, eine Veröffentlichung, wobei dies alternativ aber auch mittels eines auf einer Hüllbedingung, also einem Verzahnungsgesetz basierenden analytischen Verfahrens erfolgen kann (vgl. hierzu Hutschenreiter U., "A New Method for Bevel Gear Tooth Flank Computation", in: Berz, M.; Bischof, C.; Corliss, G. und Griewank, A. (Hrsg.), "Computational Differentiation - Techniques, Applications, and Tools", Philadelphia, SIAM 1996).
Die Frei-Form-Basismaschine, vorzugsweise eine solche mit 6-Achsen, beschreibt wie jedes andere mögliche Kinematik-Modell eine Relativbewegung zwischen Werkzeug und Werkrad (zu bearbeitendes Zahnrad) in Abhängigkeit von einer Führungsgröße. Diese Relativbewegung ist durch mathematische Abbildungen (Formeln) beschrieben, kann somit ebenso wie etwaig benötigte Ableitungsinformationen ausgewertet, also berechnet werden. Einer Simulation des Herstellungsprozesses eines Kegel- oder Hypoidrades steht damit nichts im Wege.
Das Ergebnis ist dann die exakte Zahnradgeometrie: Die erzeugten Zahnflanken werden (einschließlich Fuß) typischerweise in Form von Flankengittern, also punktweise repräsentiert. Mit der Simulation können auch geometrische Größen wie Zahndicke, Zahnhöhe, Krümmungen, Spiral- und Flankenwinkel, etc. bestimmt werden. Von diesen Verzahnungsgrößen sind die vorgegebenen (bzw. angestrebten) theoretischen Werte bekannt. Aus den berechneten Zahnflanken können die tatsächlichen exakten Werte bestimmt werden, welche dann möglichst nahe an den theoretischen Werten liegen sollten.
Bei der Abwälzsimulation /Zahnkontaktanalyse sind die Eingangsdaten typischerweise die in der Herstellungssimulation ermittelte exakte Zahnradgeometrie von Rad und Ritzel sowie weitere, das Getriebe beschreibende Parameter (möglicherweise auch Verlagerungen, etc.). Ergebnis der Zahnkontaktanalyse (ZKA) sind jeweils für Zug- und Schubpaarung der EaseOff (punktweise auf Gitter), die Wälzabweichung (=Wälzfehler), die Tragbilder und Kontaktwege auf den zugehörigen Zahnflanken.
Außerdem können aus der Abwälzsimulation Größen wie Flanken- und Kopfspiel bestimmt werden, die z. B. in Nebenbedingungen für die Optimierung eingehen können.
Wie von O. Vogel dargestellt (vgl. Vogel, O.; Griewank, A. und Bär, G., "Direct Gear Tooth Contact Analysis for Hypoid Bevel Gears", in: Computer Methods in Applied Mechanics and Engineering 191 (2202), S. 3965-3982) können die Ergebnisse der Zahnkontaktanalyse ebenfalls analytisch charakterisiert werden, ohne zuvor Zahnflanken zu bestimmen. Damit eröffnet sich ein besonders gut geeigneter Weg, die für die Optimierung benötigten Sensitivitäten effizient zu berechnen.
Eine anschließende Lastkontaktanalyse auf Basis der berechneten Zahnflanken- und Zahnfußgeometrie sowie der Kontakteigenschaften (Klaffmaße) liefert die auf der Zahnflanke auftretenden Pressungen sowie die Zahnfußspannungen. Weiterhin können der Wälzfehler unter Last, Kontakttemperaturen und der Wirkungsgrad der Verzahnung bestimmt werden, wobei dies alles Größen sind, die als Grenzwerte bzw. Nebenbedingungen in die Optimierung mit eingehen können.
Wichtig ist, zu betonen, daß -unabhängig davon, was immer auch berechnet wird - sämtliche Größen insbesondere von bestimmten Parametern der Frei-Form-Basismaschine, vorzugsweise in der 6-Achse-Ausführungsform abhängen. Deshalb sollen diese Parameter für die Optimierung genutzt werden. Dazu muss jedoch ein Optimierungsproblem im o.a. Sinne spezifiziert werden.

Auf der Basis des Verfahrens zur Optimierung der Oberflächengeometrie oder einer hiervon abhängigen Größe oder hiervon abhängigen Größen von Kegel- oder Hypoidzahnrädem nach der vorliegenden Erfindung läßt sich aufbauend sodann auch ein Verfahren zur Herstellung von Kegel- oder Hypoidzahnrädern mit optimierter Oberflächengeometrie angeben, welches

eine Grundauslegung des jeweiligen Kegel- oder Hypoidzahnrades für eine Basismaschine vornimmt, bei der jede Maschinenachse eine Basis-Maschineneinstellung mit einer theoretischen Bedeutung für das Zahnrad aufweist, dies vorzugsweise vermittels der hierfür nach dem Stand der Technik bekannten Methoden (vgl. a. die Norm ANSI-AGMA 2005-C96 bzw. ANSI-AGMA 2005-D05 oder die Klingelnberg Hausnorm KN 3029 Nr. 3, *"Auslegung von HYPOID-Getrieben mit KLINGELNBERG ZYKLO-PALLOID-VERZAHNUNG"*,

eine Transformation der Einstellungen der Grundauslegung für die Basismaschine auf die Einstellungen einer Frei-Form-Basismaschine mit höchstens 6-Achsen durchgeführt wird, die ein zu bearbeitendes Zahnrad und ein Werkzeug aufweist, welche jeweils um eine Achse drehbar sind und das Werkzeug und das zu bearbeitende Zahnrad in Bezug aufeinander entlang oder um eine Mehrzahl von Achsen bewegbar, vorzugsweise verschiebbar oder drehbar sind,

zumindest ein Zielmaß für Oberflächengeometrie oder eine hiervon abhängige Größe oder hiervon abhängige Größen des Kegel- oder Hypoidzahnrades vorgegebenen wird,

ein Verfahren zur Optimierung der Oberflächengeometrie oder einer hiervon abhängigen Größe' oder hiervon abhängigen Größen von Kegel- oder Hypoidzahnrädern nach der hier vorliegenden Erfindung ausgeführt wird,

der hieraus erhaltene Steuerparameter oder die erhaltenen Steuerparametern auf eine Frei-Form-Maschine, die auf die Frei-Form-Basismaschine mit höchstens 6-Achsen, vorzugsweise bis auf Symmetrien eineindeutig abbildbar ist, abgebildet wird, und

die Frei-Form-Maschine zur Entfernung von Material von dem zu bearbeitenden Kegel- oder Hypoidzahnrad mit dem Werkzeug unter Verwendung des abgebildeten Steuerparameters oder der abgebildeten Steuerparameter zum Erhalt der optimierten Oberflächengeometrie angesteuert wird.

Das vorstehend beschriebene Verfahren ist natürlich davon abhängig, daß die Transformation der Grundauslegung, die ja für die Basismaschine erhalten wird auf die Frei-Form-Basismaschine durchgeführt werden kann.

Wie dies erfolgen kann, dafür sollen hier - beispielhaft - 3 Möglichkeiten aufgezeigt werden:

Im Falle der Verwendung von (Taylor-)-Polynomen zur Achssynchronisation auf seiten der Frei-Form-Maschine (s.o) kann eine Transformation der Einstellungen von der Basismaschine in Einstellungen der Frei-Form-Maschine elegant mit Hilfe von Taylorarithmetik (Vorwärtsrechnen von Taylorreihen) erfolgen (vgl. hierzu a. Griewank, A., "Evaluating Derivatives- Principles and Techniques of Algorithmic Differentiation", Frontiers in Applied Mathematics, Band 129, SIAM 2000).

Dazu werden sämtliche (Maschinen-)Einstellungen der Basismaschine als von der Führungsgröße (dabei der Wälzwinkel) abhängige Größen aufgefaßt und entsprechend durch ein Taylorpolynom in der Führungsgröße modelliert. Die beispielsweise aus US 4 981402 bekannte.Transformation wird dann nicht wie dort vorgeschlagen punktweise mit den reinen Zahlenwerten in der üblichen Arithmetik, sonderen mit Taylorpolynomen in Taylorarithmetik durchgeführt. Damit erhält man anstelle der punktweise festen Achseneinstellungen unmittelbar Taylorpolynome, also Funktionen für die Achsteuerung. Das Resultat dieser Transformation stellt ggf. (das hängt von der Achsenkonfiguration und dem Herstellungsverfahren ab) nur eine Approximation dar. Genauer gesagt, die Bewegung von Basismaschine und Freiformmaschine stimmen nicht exakt überein. Jedoch kann durch Verwendung einer Ordnungssteuerung die benötigte Genauigkeit über dem gesamten Intervall $[t_1, t_2]$ gesichert werden. Die Erzielung einer ausreichenden Genauigkeit ist dabei sehr gut möglich, da typischerweise $|t| < 1$ ist und somit der Einfluß der Taylorkoeffizienten mit wachsender Ordnung abklingt. Durch diese Vorgehensweise wird gegenüber der nur punktweisen Transformation nach der US 4 981 402, die ja auch in der EP 0 784 525 Verwendung findet, wieder eine parametrisierte funktionale Darstellung für die Bewegung der Achsen gewonnen. Dies birgt den Vorteil der möglichen weiteren Nutzung dieser Repräsentation etwa im Zusammenhang der Optimierung.

Zur näherungsweisen Beschreibung von Funktionen über einem gesamten Intervall eignen sich besonders gut Tschebyscheff-Approximationen (vgl. hierzu a. Bronstein, I.N., Semendjajew, K.A., Musiol, G. und Mühlig, G., "Taschenbuch der Mathematik", 5. Aufl., Frankfurt a.M. 2001, S. 947 - 948). Gegenüber der oben erwähnten Modelltransformation mittels Taylorarithmetik ist für den Fall einer nur näherungsweise möglichen Transformation bei der Nutzung einer Tschebycheff-Approximation eine Reduktion in der benötigten Ordnung zu erwarten. Die Bestimmung der Tschebyscheff Approximation kann mit bekannte Algorithmen (Tschebyscheff-Approxiamtion bzw. Regression, z B. auf der Grundlage der punktweisen Transformation aus der US 4 981 402 erfolgen (vgl. hierzu a. Judd, K., *"Numerical Methods in Economics",* MIT Cambridge MA, 1998).

Eine weitere Möglichkeit besteht nun darin die Einstellungen der Basismaschine, vorzugsweise $P^{K0}=\{P_i,P_j,\Sigma, S,X_b,X_p,E_m,RA,q_m\}$ (also der Einstellungen: Werkzeugneigung [vorzugsweise Messerkopf oder Schleifscheibenneigung] (tilt), Neigungsorientierung (swivel), Maschinengrundwinkel, Werkzeugexzentrizität oder Radiale, Tiefenzustellung, Abstand Maschinenmitte zu Achskreuzungspunkt, Maschinenachsversatz, Wälzübersetzung, Wiegenwinkel), auch als die Parameter des zugeordneten Teilniodells der Frei-Form-Maschine aufzufassen.

So kann für jede Achse der Freiformmaschine die aus diesem Teilmodell resultierende anteilige Bewegung etwa unter Zuhilfenahme der punktweisen Transformation aus der US 4 981 402 punktweise exakt bestimmt werden. Der dabei ausgeführte Algorithmus beschreibt eine funktionalen Zusammenhang, kann also abstrakt als Funktion aufgefaßt werden, die die anteilige Bewegung aller Achsen der Freiformmaschine beschreibt. Vermittels dieses Wegs können somit die Einstellungen der Basismaschine in das Modell der Freiform-Basis-Maschine integriert werden, etwa um dem Fachmann, der dieses besser kennt, die weitere Möglichkeit der Einflussnahme zu ermöglichen nachdem bereits eine Freiformoptimierung anch der vorliegenden Erfindung in einem dafür bevorzugtem Teilmodell durchgeführt wurde.

Diese Verquickung von Basismaschine und Frei-Form-Basismaschine in einem Modell mit der Möglichkeit eine Herstellungssimulation durchzuführen, stellt einen weiteren Vorteil der hier vorliegenden Erfindung dar, dessen Möglichkeit bislang von der Fachwelt, etwa in der EP 0 784 525 bestritten wurde.

Generell ist zum Transformationsprozeß der Grundauslegung von der Basismaschine auf die Frei-Form-Maschine zu sagen, daß natürlich immer Maschineneinstellungen für alle 4 Flanken einer Zahnradpaarung ermittelt werden.

Auf der Basis des Verfahrens zur Optimierung der Oberflächengeometrie oder hiervon abhängiger Größen von Kegel- oder Hypoidzahnrädem nach der vorliegenden Erfindung läßt sich aufbauend sodann auch ein Verfahren zur Korrektur von Kegel- oder Hypoidzahnrädern mit optimierter Oberflächengeometrie angeben,
wobei

für ein bereits gefertigtes Kegel- oder Hypoidzahnrad, für das bereits ein oder mehrere Steuerparameter für die Frei-Form-Basismaschine, welcher oder welche einen Einfluß auf die Oberflächengeometrie oder die hiervon abhängige Größe oder Größen des Kegel- oder Hypoidzahnrades hat oder haben, ermittelt ist oder sind,
zumindest ein Zielmaß für die Oberflächengeometrie oder eine hiervon abhängige Größe oder abhängige Größen des Kegel- oder Hypoidzahnrades vorgegebenen wird,

das Verfahren zur Optimierung der Oberflächengeometrie oder einer hiervon abhängigen Größe oder hiervon abhängigen Größen von Kegel- oder Hypoidzahnrädern nach der hier vorliegenden Erfindung ausgeführt wird, und
der hieraus erhaltene neue Steuerparameter oder die erhaltenen neuen Steuerparametern auf eine Frei-Form-Maschine, die auf eine Frei-Form-Basismaschine mit höchstens 6-Achsen, vorzugsweise eineindeutig abbildbar ist, abgebildet wird, und

die Frei-Form-Maschine zur Entfernung von Material von dem zu bearbeitenden Kegel- oder Hypoidzahnrad mit dem Werkzeug unter Verwendung des abgebildeten Steuerparameters oder der abgebildeten Steuerparameter zum Erhält der optimiertern Oberflächengeometrie angesteuert wird.

Wie bereits eingangs erwähnt, kann die Erfindung auch als Computerprogramm nach Anspruch 40 realisiert sein, wobei es die entsprechenden Instruktionen aufweist, die zur Durchführung des Verfahrens eingerichtet sind. Ein solches Computerprogramm kann dabei in jeder Form vorliegen, insbesondere aber auch als Computerprogrammprodukt auf einem computerlesbaren Medium, wie etwa Diskette, CD oder DVD, wobei es Computerprogramm-Code-Mittel aufweist, bei dem jeweils nach Laden des Computerprogramms ein Computer durch das Programm zur Durchführung des erfindungsgemäßen Verfahrens veranlaßt wird. Es kann aber etwa auch als Computerprogrammprodukt, welches ein Computerprogramm auf einem elektronischen Trägersignal aufweist, bei dem jeweils nach Laden des Computerprogramms ein Computer durch das Programm zur Durchführung des erfindungsgemäßen Verfahrens veranlaßt wird, vorliegen.

In Gesamtheit gesehen kann auch ein Zahnradherstellungs- und/oder Korrektursystem zur Herstellung oder Korrektur von Kegel- oder Hypoidzähnrädern nach Anspruch 38 zusammengestellt sein.

Vorzugsweise weist das Zahnradherstellungs- und/oder Korrektursystem zur Herstellung oder Korrektur von Kegel- oder Hypoidzahnrädem ein Computersystem mit einer Speichereinheit (Diskettenlaufwerk; CD-Laufwerk, DVD-Laufwerk oder auch eine Chipkarten- oder auch USB-Speicherstick-Einheit) zum Beschreiben eines Datenträgers mit dem Steuerparameter oder den Steuerparametern oder eine Sendeeinheit zum Übertragen des Steuerparameters oder der Steuerparameter auf, und die Frei-Form-Maschine mit höchstens 6 Achsen eine Leseeinheit zum Lesen des Datenträgers mit dem Steuerparameter oder den Steuerparametern oder eine Empfangseinheit zum Empfang des Steuerparameters oder der Steuerparameter. Auf diese Weise können, der oder die Steuerparameter von dem Computersystem auf die 6-Achsen Maschine zu deren Ansteuerung gelangen.

Im folgenden werden nicht einschränkend zu verstehende Ausführungsbeispiele der vorliegenden Erfindung anhand der Zeichnung besprochen. In dieser zeigen:

Fig.1    eine Ausführungsform eines allgemeinen 6-Achsen-Modells einer Verzahnmaschine (Frei-Form-Basismaschine) und die dabei relevanten Koordinatensysteme,

Fig.2    eine schematische Darstellung einer bevorzugten Ausführungsform des Verfahrens nach der vorliegenden Erfindung,

Fig.3 eine schematische Darstellung einer weiteren bevorzugten Ausführungsform des Verfahrens nach der vorliegenden Erfindung,

Fig.4 eine schematische Darstellung eines Teils einer bevorzugten Ausführungsförm des Verfahrens nach der vorliegenden Erfindung zur Simulation der Herstellung eines Kegel- oder Hypoidzahnrades (Ritzel oder Rad),

Fig.5 eine schematische Darstellung eines weiteren Teils einer bevorzugten Ausführungsform des Verfahrens nach der vorliegenden Erfindung zur Simulation der Abwälzung, somit der Zahnkontaktanalyse,

Fig.6 eine schematische Darstellung des grundsätzlichen Einflusses von Parametern auf die Oberflächengeometrie von Kegel- oder Hypoidzahnrädern, und des daraus resultierenden Einflusses auf die Kohtaktgeometrie und

Fig.7 eine schematische Darstellung eines Teils einer bevorzugten Ausführungsform des Verfahrens nach der vorliegenden Erfindung zur initialen Parameterbelegung (Anfangseinstellungen).

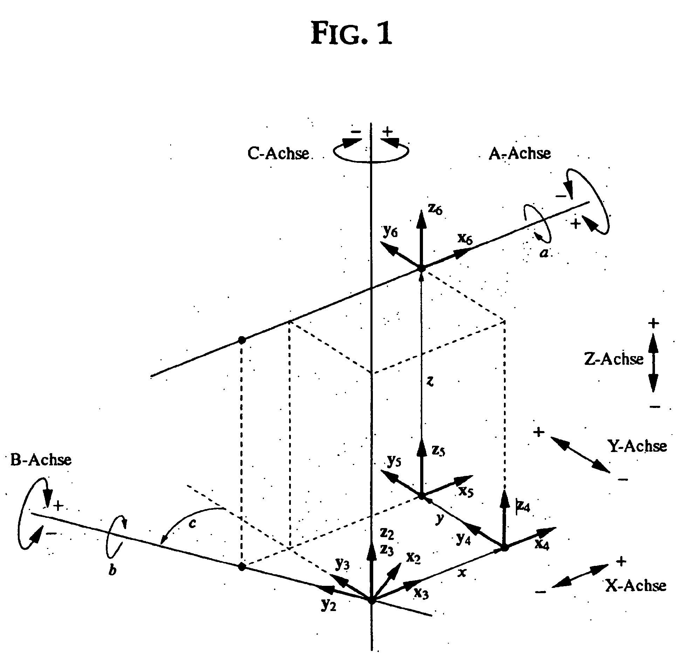

Fig. 1 zeigt eine Ausführungsform eines allgemeinen 6-Achsen-Modells einer Verzahnmaschine (Frei-Form-Basismaschine) und die dabei relevanten Koordinatensysteme. Zur Beschreibung der Relativbewegung des Werkzeugs gegenüber dem Werkstück werden die Koordinatensysteme $\Sigma_1$ bis $\Sigma_7$ verwendet.

Das Koordinatensystem $\Sigma_7$ ist fest mit dem Werkzeug verbunden. Es dreht sich gegenüber $\Sigma_6$ *mathematisch positiv* um die gemeinsame *x*-Achse mit dem Drehwinkel a. Die Drehachse $x_6 = x_7$ zeigt in das Werkzeug *hinein.*

Das Koordinatensystem $\Sigma_1$ ist fest mit dem Werkstück verbunden. Es dreht sich gegenüber $\Sigma_2$ *mathematisch positiv* um die gemeinsame *y*-Achse mit dem Drehwinkel b. Die Drehachse $y_2 = y_1$ zeigt in das Werkstück *hinein.*

Die 3 Linearachsen X, Y und Z bilden ein Rechts-Dreibein. Die Relativlage von $\Sigma_6$ zu $\Sigma_2$ ist hier in der Figur veranschaulicht und wird durch nachfolgende Transformationen genau beschrieben:

$$r_1 = D_2^T(b)r_2; \qquad r_2 = D_2(b)r_1,$$

$$r_2 = D_3^T(c)r_3, \qquad r_3 = D_3(c)r_2,$$

$$r_3 = r_4 + |x\ 0\ 0|^T, \quad r_4 = r_3 - |x\ 0\ 0|^T,$$

$$r_4 = r_5 + |0\ y\ 0|^T, \quad r_5 = r_4 - |0\ y\ 0|^T,$$

$$r_5 = r_6 + |0\ 0\ z|^T, \quad r_6 = r_5 - |0\ 0\ z|^T,$$

$$r_6 = D_1(a)r_7, \qquad r_7 = D_1^T(a)r_6.$$

Insgesamt ergibt sich also die Transformation $r_1 = Ar_7 + a$ mit

$$A = D_2^T(b)D_3^T(c)D_1(a),$$

$$a = D_2^T(b)D_3^T(c)[x\ \ y\ \ z]^T$$

Umgekehrt erhält man die Transformation $r_7 = \overline{A}r_1 + \overline{a}$ mit

$$\overline{A} = D_1^T(a)D_3(c)D_2(b),$$

$$\overline{a} = -D_1^T(a)\begin{bmatrix} x & y & z \end{bmatrix}^T$$

Hiebei bezeichen die 3 × 3-Matrizen $D_1(a)$, $D_2(b)$ und $D_3(c)$ Drehungen jeweils um die x-, die y- und die z-Achse eines Koordinatensystems mit den Drehwinkeln *a, b* bzw. *c.*

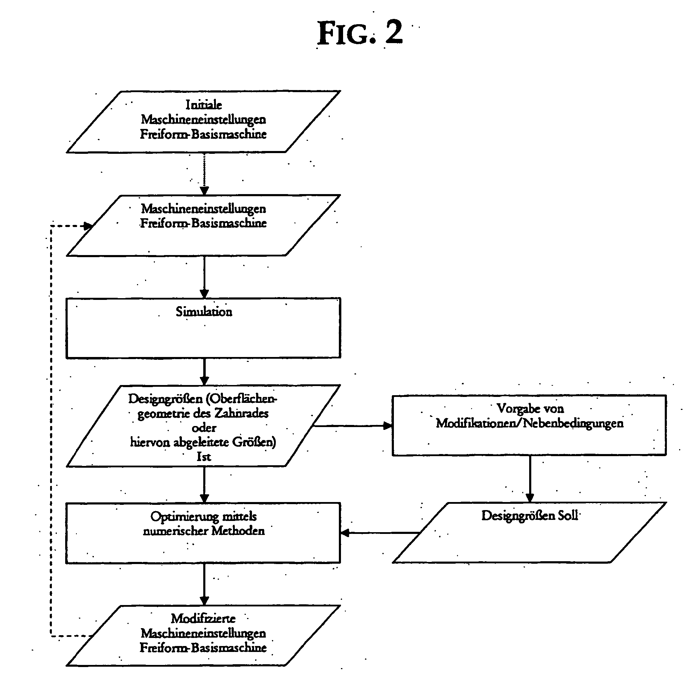

Fig.2 zeigt. eine schematische Darstellung einer bevorzugten Ausführungsform des Verfahrens nach der vorliegenden Erfindung.

Auf der Grundlage von gegebenen Maschineneinstellungen für die Freifom-Basismaschine und dem Modell einer Frei-Form-Basismaschine erfolgt eine Simulationsrechnung, um interessierende Designgrößen wie etwa die Flankenform und die Zahndicke zu bestimmen. Diese Simulationsrechnung umfasst je nach zu bestimmenden Designgrößen die Herstellsimulation sowie Kontaktanalyse und Lastkontaktanalyse. Eine solche Lastkontaktanalyse ist etwa nach dem Stand der Technik durch das im Rahmen des von der Fa. Klingelnberg entwickelten KIMOS-Systems verwendeten Programms BECAL der Forschungsvereinigung Antriebstechnik (FVA) möglich.

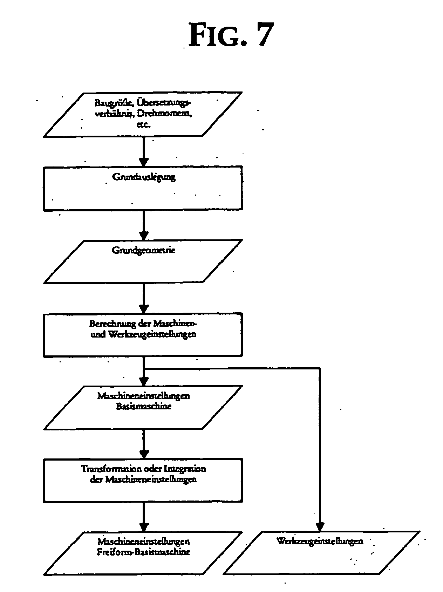

Durch die Vorgabe von Modifikationen für die Designgrößen wird ein Solldesign definiert, wobei dies die Vorgabe von einzuhaltenden Nebenbedingungen einschließt. Beispielsweise kann als Ziel eine in gewissem Rahmen modifizierte Zahnform unter Beibehaltung der gegenwärtigen Zahndicke verfolgt werden. Mit Hilfe von numerischen Methoden der in der Regel nichtlinearen Optimierung werden modifizierte Maschineneinstellungen für die Frei-Form-Baismaschine bestimmt, welche das Solldesign zumindest näherungsweise realisieren. Die Güte dieser Näherung hängt im wesentlichen von der Gutartigkeit des formulierten Ziels ab. Dieser Prozess kann bei Bedarf beliebig oft wiederholt werden. Die eingehenden Maschineneinstellungen für den ersten und ggf. einzigen Durchlauf werden gemäß Fig. 7 aus der Auslegungsberechnung gewonnen (initiale Maschineneinstellungen)

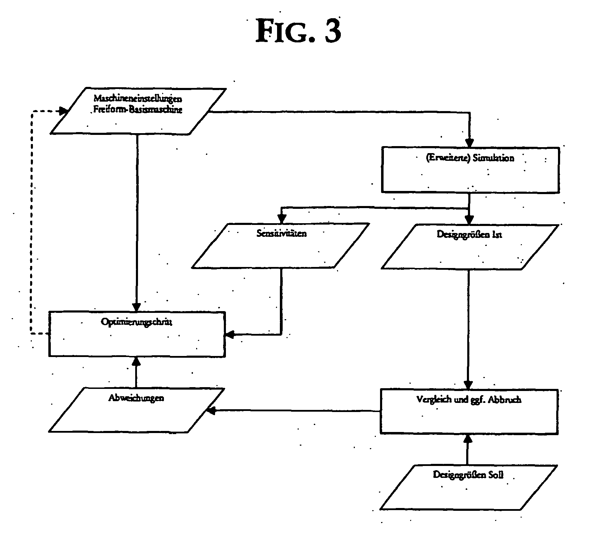

Fig.3 zeigt eine schematische Darstellung einer weiteren bevorzugten Ausführungsform des Verfahrens nach der vorliegenden Erfindung,

Gezeigt wird der typische Datenfluss von iterativ arbeitenden, ableitungsbasierten Optimierungsverfahren, also eine Konkretisierung des Schritts "Optimierung mittels numerischer Methoden" nach Fig. 2. Die aktuellen Maschineneinstellungen der Frei-Form-Basismaschine (Anmerkung: das sind immer die Einstellungen für alle 4 Flanken!) verwirklichen ein Istdesign, welches durch Simulationsberechungen quantifiziert wird. Der Vergleich des Istdesigns mit dem Solldesign führt zu Abweichungen. Sind diese Abweichungen tolerabel, so wird das iterative Optimierungsverfahren mit Erfolg abgebrochen. Ansonsten werden im sogenannten Optimierungsschritt aus den aktuellen Maschineneinstellungen und den daraus ermittelten Abweichungen unter Zuhilfenahme der Sensitivitäten neue Maschineneinstellungen bestimmt, die dann zu den aktuellen werden. Zur Bestimmung der Sensitivitäten (Ableitungen) kann die Simulationsberechnung entsprechend erweitert werden. Weitere Ausführungen hierzu finden sich in O. Vogel et al. (Vogel, O.; Griewank, A.; Henlich, T. und Schlecht, B., "Automatisches Differenzieren im Maschinenbau - Simulation und Optimierung bogenverzahnter Kegetradgetriebe" in: Tagungsband "Dresdner Maschinenelemente Kolloquium - DMK2003", TU Dresden 2003, S. 177 - 194).

Um einen Abbruch des Verfahrens auch bei nur schlecht oder gar nicht lösbaren Problemen zu garantieren, werden i. d. R. weitere Abbruchkriterien verwendet, auf die hier nicht näher eingegangen werden soll. Siehe hierzu auch Nocedal und Wright (Nocedal, J.; Wright, S.J., "Numerical Optimization", Springer Series in Operations Research, New York, 1999.).

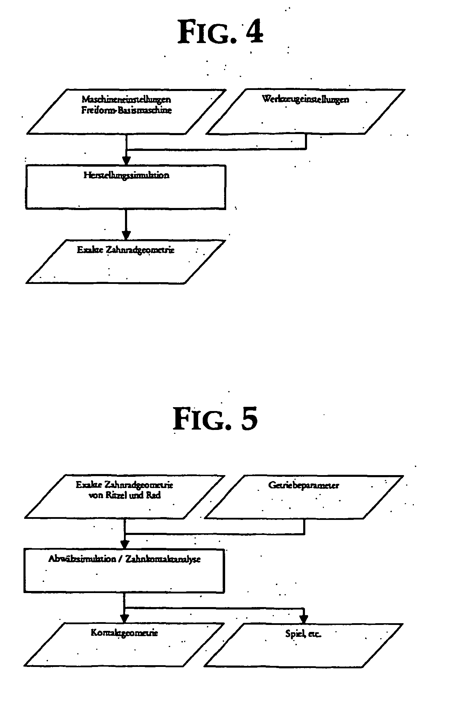

Fig.4 zeigt eine schematische Darstellung eines Teils einer bevorzugten Ausführungsform des Verfahrens nach der vorliegenden Erfindung zur Simulation der Herstellung eines Kegel- oder Hypoidzahnrades (Ritzel oder Rad).

Veranschaulicht wird, daß auf der Grundlage der Maschineneinstellungen einer Frei-Form-Basismaschine und den Werkzeugeinstellungen eine Herstellungssimulation für ein Zahnrad durchgeführt werden kann. Ergebnis dieser Herstellungssimulation ist die exakte Zahnradgeometrie, welche die Zahnflanken (einschließlich Zahnfuß) als Flankengitter, sowie Größen wie die Zahndicke und Zahnhöhe umfasst.

Fig.5 zeigt eine schematische Darstellung eines weiteren Teils einer bevorzugten Ausführungsform des Verfahrens nach der vorliegenden Erfindung zur Simulation der Abwälzung, somit der Zahnkontaktanalyse.

Dargestellt wird, daß mit der durch Herstellungssimulation erhaltenen exakten Zahnradgeometrie von Ritzel und Rad und Getriebeparametern wie Achswinkel und Achsabstand aber auch Verlagerungen eine Abwälzsimulation/Zahnkontaktanalyse durchgeführt wird.

Hierbei kann sowohl ein Einzel- als auch ein Mehrfacheingriff der Zähne betrachtet werden. Resultat der Abwälzsimulation/Zahnkontaktanalyse sind neben den die Kontaktgeometrie beschreiben Größen wie EaseOff, Tragbild und Wälzfehler auch Größen wie Kopf- und Flankenspiel. Die Kontaktgeometrie stellt neben der exakten Zahnradgeometrie die eingehenden Größen für die hier nicht dargestellte Lastkontaktanalyse dar.

Zu den Optimierungszielgrössen, ist ferner zu bemerken: Auch die Spielgrössen sind nicht nur als skalare/ punktuelle Grössen zu sehen. So kann beim Kopfspiel wie auch schon beim Wälzfehler, entweder z.B. das minimale Kopfspiel oder das Kopfspiel entlang des gesamten Zahnes betrachtet werden.

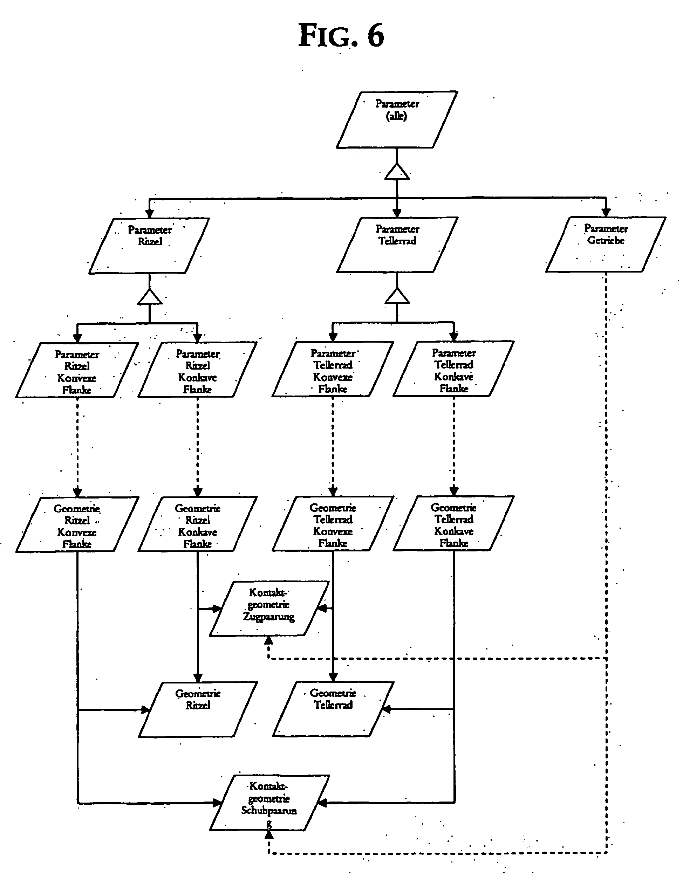

Fig.6 zeigt eine schematische Darstellung des grundsätzlichen Einflusses von Parametern auf die Oberflächengeometrie von Kegel- oder Hypoidzahnrädern und des daraus resultierenden Einflusses auf die Kontaktgeometrie.

Fig.7 zeigt eine schematische Darstellung eines Teils einer bevorzugten Ausführungsform des Verfahrens nach der vorliegenden Erfindung zur initialen Parameterbelegung (Anfangseinstellungen).

Bei der Grundauslegung von Kegel- und Hypoidzahnradgetrieben wird ausgehend etwa von Baugrösse, Übersetzungsverhältnis und Drehmoment die Grundgeometrie von Ritzel und Rad bestimmt. Die sich anschließende Berechnung zugehöriger Maschinen- und Werkzeugeinstellungen erfolgt hier auf Grundlage einer Basismaschine, so daß zunächst Maschineneinstellungen für diese Basismaschine gewonnen werden. Diese werden dann in Maschineneinstellungen der Frei-Form-Basismaschine transformiert, im Falle eines gemischten Modells jedoch nur als Einstellungen (Parameter) des entsprechendes Teilmodells integriert.

**Patentansprüche**

1. Verfahren zur Optimierung der Oberflächengeometrie oder einer hiervon abhängigen Größe oder hiervon abhängigen Größen von Kegel- oder Hypoidzahnrädern
   für ihre Herstellung auf einer Frei-Form-Maschine, die auf eine Frei-Form-Bäsismaschine mit höchstens 6-Achsen bis auf Symmetrien umkehrbar eindeutig abbildbar ist, die
   ein zu bearbeitendes Zahnrad und ein Werkzeug aufweist, welche jeweils um eine Achse drehbar sind, und
   das Werkzeug und das zu bearbeitende Zahnrad in Bezug aufeinander entlang oder um eine Mehrzahl von Achsen bewegbar, vorzugsweise verschiebbar oder drehbar sind,
   wobei
   die Optimierung der Oberflächengeoinetrie oder der hiervon abhängigen Größe oder Größen des Kegel- oder Hypoidzahnrades **dadurch** erfolgt, daß
   ein oder mehrere Steuerparameter, welcher oder welche einen Einfluß auf die Oberflächengeometrie oder die hiervon abhängige Größe oder Größen des Kegel- oder Hypoidzahnrades hat oder haben, anhand einer Simulation des Zahnradherstellungsprozesses und/oder einer Abwälzung und/oder einer Lastkontaktanalyse auf der Frei-Form-Basismaschine solange variiert wird oder werden,
   bis hierdurch die Oberflächengeometrie oder die hiervon abhängige Größe oder Größen des Kegel- oder Hypoidzahnrades zumindest einem vorgegebenen Zielmaß entspricht.

2. Verfahren zur Optimierung der Oberflächengeometrie oder einer hiervon abhängigen Größe oder hiervon abhängigen Größen von Kegel- oder Hypoidzahnrädern nach Anspruch 1, **dadurch gekennzeichnet, daß** die Frei-Form-Maschine auf eine Frei-Form-Basismaschine mit höchstens 6-Achsen bis auf Symmetrien eineindeutig (bijektiv) abbildbar ist und ihre Achsenart und Achsenanordnung einander entsprechen.

3. Verfahren zur Optimierung der Oberflächengeometrie oder einer hiervon abhängigen Größe oder hiervon abhängigen Größen von Kegel- oder Hypoidzahnrädern nach Anspruch 1 oder 2, **dadurch gekennzeichnet, daß** die Optimierung des Steuerparameters oder der Steuerparameter für eine Frei-Form-Basismaschine mit 6 Achsen, vorzugsweise drei Drehachsen (A, B, C) und drei Linearachsen (X, Y, Z) erfolgt.

4. Verfahren zur Optimierung der Oberflächengeometrie oder einer hiervon abhängigen Größe oder hiervon abhängigen Größen von Kegel- oder Hypoidzahnrädern nach Anspruch 3, **dadurch gekennzeichnet, daß** die Optimierung des Steuerparameters oder der Steuerparameter für eine Frei-Form-Basismaschine mit den 6-Achsen

   A-Achse zur Werkzcugdrehung,
   B-Achse zur Drehung des herzustellenden Zahnrades,
   C-Achse als Drehachse zu Einstellung des Winkels zwischen A- und B-Achse oder zwischen B-Achse und Werkzeugspitzenebene,
   X-Achse als Linearachse in Richtung A-Achse,
   Y-Achse als Linearachse, die mit X- und Z-Achse ein Rechtssystem bildet, und der
   Z-Achse als Linearachse in Richtung Gemeinlot von A- und B-Achse

   erfolgt.

5. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 4, **dadurch gekennzeichnet, daß** als Steuerparameter zumindest auch ein Werkzeugeinstellparameter dient.

6. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 5, **dadurch gekennzeichnet, daß** als Steuerparameter zumindest auch ein Maschinensteuerparameter zur Ansteuerung von mindestens einer Maschinenachse dient.

7. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 6, **dadurch gekennzeichnet, daß** die Optimierung des Steuerparameters oder der Steuerparameter für eine solche Frei-Form-Basismaschine erfolgt, deren Achsbewegungsimulationen untereinander vermittels zumindest einer, vorzugsweise stetigen, besonders bevorzugterweise stetig differenzierbaren mathematischen Funktion zur Achsansteuerung $v_j(t,P_j)$ synchronisiert werden, wobei eine der Maschinenachsen selbst oder eine virtuelle Achse dabei eine Führungsgröße t generiert und so als Leitachse zumindest der Positionierung der anderen Achsen dient, die von dieser Führungsgröße $t$ und den in einem der jeweiligen Funktion zugeordneten Parametervektor $P_j$ enthaltenen Parametern funktional abhängen und als Steuerparameter zumindest auch ein Parameter $p_{ji}$ aus dem Parametervektor $P_j$ zumindest einer der die Achsbewegungen synchronisierenden mathematischen Funktionen $v_j$ verwendet wird.

8. Verfahren zur Optimierung der Oberflächengeometrie oder einer hiervon abhängigen Größe oder hiervon abhängigen Größen von Kegel- oder Hypoidzahnrädern nach Anspruch 7, **dadurch gekennzeichnet, daß** die Synchronisation der Achsbewegungen vermittels mehrerer abschnittsweise unterschiedlicher mathematischer Funktionen erfolgt, wobei die Abschnitte durch Intervalle von t, etwa als $[t_m, t_n]$ mit $t_n > t_m$ gegeben sind.

9. Verfahren zur Optimierung der Oberflächengeometrie oder einer hiervon abhängigen Größe oder hiervon abhängigen Größen von Kegel- oder Hypoidzahnrädern nach Anspruch 7 oder 8, **dadurch gekennzeichnet, daß** die Synchronisation der Achsbewegungen vermittels additiv überlagerter mathematischer Funktionen erfolgt, wobei die Überlagerung besonders vorzugsweise von der Form

$$v_j(t,P_j) = v_j^1(t,P_j^1) + v_j^2(t,P_j^2) + \ldots + v_j^l(t,P_j^l)$$

mit 1 ≥1 ist.

10. Verfahren zur Optimierung der Oberflächengeometrie oder einer hiervon abhängigen Größe oder hiervon abhängigen Größen von Kegel- oder Hypoidzahnrädern nach einem der Ansprüche 7. bis 9, **dadurch gekennzeichnet, daß** als mathematische Funktion $v_j$ zur Achsbewegungssynchronisation zumindest auch ein Polynom beliebiger, vorzugsweise sechster Ordnung verwendet wird und als Steuerparameter die jeweiligen Koeffizienten $p_{ji}$ des Polynoms $v_j$ verwendet werden.

11. Verfahren zur Optimierung der Oberflächengeometrie oder einer hiervon abhängigen Größe oder hiervon abhängigen Größen von Kegel- oder Hypoidzahnrädern nach einem der Ansprüche 7 bis 10, **dadurch gekennzeichnet, daß** als mathematische Funktion $v_j$ zur Achsbewegungssynchronisation zumindest auch eine auf Tschebyscheff-Polynomen als Basisfunktionen basierende Reihenentwicklung verwendet wird, vorzugsweise in einem Intervall $[t_1, t_2]$ mit $t_1 > t_2$ als Funktion der Form

$$v_j(t,P) = p_{j_0} + p_{j_1} T_1(\tilde{t}) + p_{j_2} T_2(\tilde{t}) + \ldots + p_{j_i} T_i(\tilde{t}) + \ldots + p_{j_{d_v}} T_{d_v}(\tilde{t})$$

mit $P_j = (p_{j_0}, p_{j_1}, p_{j_2}, \ldots p_{j_i}, \ldots, p_{j_{d_v}})$ und i=1,..., $d_v$

$$\text{und } \tilde{t} = 2\frac{t - t_1}{t_2 - t_1} - 1$$

sowie $T_i$ jeweils als Tschebyscheff-Polynom
und hierbei als Steuerparameter die jeweiligen Koeffizienten $p_{ji}$ der Reihe $v_j$ verwendet werden.

**12.** Verfahren zur Optimierung der Oberflächengeometrie oder einer hiervon abhängigen Größe oder hiervon abhängigen Größen von Kegel- oder Hypoidzahnrädern nach einem der Ansprüche 7 bis 11, **dadurch gekennzeichnet, daß** als mathematische Funktion $v_j$ zur Achsbewegungssynchronisation zumindest auch eine Splinefunktion, die aus stetig ineinander übergehenden Polynomen, vorzugsweise dritten Grades gebildet ist und als Steuerparameter die jeweiligen Splinekoeffizienten verwendet werden.

**13.** Verfahren zur Optimierung der Oberflächengeometrie oder einer hiervon abhängigen Größe oder hiervon abhängigen Größen von Kegel- oder Hypoidzahnrädern nach einem der Ansprüche 1 bis 12, **dadurch gekennzeichnet, daß** die Optimierung der Oberflächengeometrie oder einer hiervon abhängigen Größe oder hiervon abhängigen Größen des Kegel- oder Hypoidzahnrades **dadurch** erfolgt, daß der oder die Steuerparameter, welcher oder welche einen Einfluß auf die Oberflächengeometrie oder die hiervon abhängige Größe oder Größen des Kegel- oder Hypoidzahnrades hat oder haben, mittels eines numerischen Optimierungsverfahrens solange variiert wird oder werden, bis hierdurch die Oberflachengeometrie oder die hiervon abhängige Größe des Kegel- oder Hypoidzahnrades zumindest einem vorgegebenen Zielmaß entspricht.

**14.** Verfahren zur Optimierung der Oberflächengeometrie oder einer hiervon abhängigen Größe oder hiervon abhängigen Größen von Kegel- oder Hypoidzahnrädern nach Anspruch 13, **dadurch gekennzeichnet, daß** als numerisches Optimierungsverfahren ein ableitungsbasiertes Verfahren verwendet wird.

**15.** Verfahren zur Optimierung der Oberflächengeometrie oder einer hiervon abhängigen Größe oder hiervon abhängigen Größen von Kegel- oder Hypoidzahnrädern nach Anspruch 14, **dadurch gekennzeichnet, daß** zur Berechnung der Ableitungen (Sensitivitäten) ein Differenzen-Quotienten-Verfahren verwendet wird.

**16.** Verfahren zur Optimierung der Oberflächengeometrie oder einer hiervon abhängigen Größe oder hiervon abhängigen Größen von Kegel- oder Hypoidzahnrädern nach Anspruch 14, **dadurch gekennzeichnet, daß** zur Berechnung der Ableitungen (Sensitivitäten) die automatische Differentiation (AD) verwendet wird.

**17.** Verfahren zur Optimierung der Oberflächengeometrie oder einer hiervon abhängigen Größe oder hiervon abhängigen Größen von Kegel- oder Hypoidzahnrädern nach einem der Ansprüche 1 bis 12, **dadurch gekennzeichnet, daß** die Optimierung der Oberflächengeometrie oder einer hiervon abhängigen Größe oder hiervon abhängigen Größen des Kegel- oder Hypoidzahnrades **dadurch** erfolgt, daß der oder die Steuerparameter, welcher oder welche einen Einfluß auf die Oberflächengeometrie oder die hiervon abhängige Größe oder Größen des Kegel- oder Hypoidzahnrades hat oder haben, unter Verwendung eines genetischen Algorithmus solange variiert wird oder werden, bis hierdurch die Oberflächengeometrie oder die hiervon abhängige Größe des Kegel- oder Hypoidzahnrades zumindest einem vorgegebenen Zielmaß entspricht.

**18.** Verfahren zur Optimierung der Oberflächengeometrie oder einer hiervon abhängigen Größe oder hiervon abhängigen Größen von Kegel- oder Hypoidzahnrädern nach einem der Ansprüche 1 bis 17, **dadurch gekennzeichnet, daß** die Optimierung der Oberflächengeometrie zumindest auch anhand der Form der Zahnflanken, vorzugsweise einschließlich des Zahnradfußes erfolgt, bis diese dem vorgegebenen Zielmaß entspricht.

**19.** Verfahren zur Optimierung der Oberflächengeometrie oder einer hiervon abhängigen Größe oder hiervon abhängigen Größen von Kegel- oder Hypoidzahnrädern nach Anspruch 18, **dadurch gekennzeichnet, daß** das Verfahren der kleinsten Fehlerquadrate auf die Abweichungen von einer vorgegebenen geometrischen Sollstruktur der Zahnflankengeometrie, vorzugsweise bezogen auf ein 2-dimensionales Gitter, angewendet wird, um zu bestimmen, ob die Form der Zahnflanke dem vorgegebenen Zielmaß entspricht.

**20.** Verfahren zur Optimierung der Oberflächengeometrie oder einer hiervon abhängigen' Größe oder hiervon abhängigen Größen von Kegel- oder Hypoidzahnrädern nach einem der Ansprüche 1 bis 19, **dadurch gekennzeichnet, daß** die Optimierung der Oberflächengeometrie zumindest auch anhand der Zahndicke und Zahnhöhe erfolgt, bis diese dem vorgegebenen Zielmaß entsprechen.

21. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 20, **dadurch gekennzeichnet, daß** die Optimierung der Oberflächengeometrie zumindest auch anhand der EaseOff-Topographie erfolgt, bis diese dem vorgegebenen Zielmaß entspricht.

22. Verfahren zur Optimierung der Oberflächengeometrie oder einer hiervon abhängigen Größe oder hiervon abhängigen Größen von Kegel- oder Hypoidzahnrädern nach Anspruch 21, **dadurch gekennzeichnet, daß** das Verfahren der kleinsten Fehlerquadrate auf die Abweichungen von einer vorgegebenen EaseOff-Topographie, vorzugsweise bezogen auf ein 2-dimensionales Gitter, angewendet wird, um zu bestimmen, ob die EaseOff-Topographie dem vorgegebenen Zielmaß entspricht.

23. Verfahren zur Optimierung der Oberflächengeometrie oder einer hiervon abhängigen. Größe oder hiervon abhängigen Größen von Kegel- oder Hypoidzahnrädern nach einem der Ansprüche 1 bis 22, **dadurch gekennzeichnet, daß** die Optimierung der Oberflächengeometrie zumindest auch anhand des Wälzfehlers erfolgt, bis dieser dem vorgegebenen Zielmaß entspricht.

24. Verfahren zur Optimierung der Oberflächengeometrie oder einer hiervon abhängigen Größe oder hiervon abhängigen Größen von Kegel- oder Hypoidzahnrädem nach Anspruch 23, **dadurch gekennzeichnet, daß** der Wälzfehler auf einen vorgegebenen Maximalwert hin überwacht wird, um zu bestimmen, ob der Wälzfehler dem vorgegebenen Zielmaß entspricht.

25. Verfahren zur Optimierung der Oberflächengeometrie oder hiervon abhängiger Größen von Kegel- oder Hypoidzahnrädern nach Anspruch 23 oder 24, **dadurch gekennzeichnet, daß** das Verfahren der kleinsten Fehlerquadrate auf die Abweichungen von einer vorgegebenen Wälzfehlerfunktion, vorzugsweise bezogen auf ein 1-dimensionales Gitter, angewendet wird, um zu bestimmen, ob der Wälzfehler dem vorgegebenen Zielmaß entspricht.

26. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 25, **dadurch gekennzeichnet, daß** die Optimierung der Oberflächengeometrie zumindest auch anhand der Tragbildlage erfolgt, bis diese einem vorgegebenen Zielmaß entspricht.

27. Verfahren zur Optimierung der Oberflächengeometrie oder einer hiervon abhängigen Größe oder hiervon abhängigen Größen von Kegel- oder Hypoidzahnrädern nach Anspruch 26, **dadurch gekennzeichnet, daß** das Verfahren der kleinsten Fehlerquadrate auf die Abweichungen der Form und/oder der Mittelpunktslage des tatsächlichen Tragbildes von einem als Höhenlinie in einer um den Wälzfehler bereinigten EaseOff-Topographie vorgegebenen Tragbild, vorzugsweise bezogen auf ein 1-dimensionales. Gitter, dazu eingesetzt wird, um zu bestimmen, ob das Tragbild dem vorgegebenen Zielmaß entspricht.

28. Verfahren zur Optimierung der Oberflächengeometrie oder einer hiervon abhängigen Größe oder hiervon abhängigen Größen von Kegel- oder Hypoidzahnrädern nach Anspruch 26 oder 27, **dadurch gekennzeichnet, daß** das Verfahren der Ellipsen-Approximation dazu eingesetzt wird, um zu bestimmen, ob das Tragbild dem vorgegebenen Zielmaß entspricht.

29. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 28, **dadurch gekennzeichnet, daß** die Optimierung der Oberflächengeometrie zumindest auch anhand des Verlaufes des Kontaktweges oder der Kontaktwege erfolgt, bis dieser dem vorgegebenen Zielmaß entspricht.

30. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 29, **dadurch gekennzeichnet, daß** die Optimierung der Oberflächengeometrie zumindest auch anhand des Flanken- und Kopfspiels erfolgt, bis diese dem vorgegebenen Zielmaß entsprechen.

31. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 30, **dadurch gekennzeichnet, daß** die Optimierung anhand der von der Oberflächengeometrie abhängigen Spannungen erfolgt, bis diese einem vorgegebenen Zielmaß entsprechen.

32. Verfahren zur Optimierung der Oberflächengeometrie oder einer hiervon abhängigen Größe oder hiervon abhängigen Größen von Kegel- oder Hypoidzahnräder nach einem der Ansprüche 1 bis 31, **dadurch gekennzeichnet, daß** die Optimierung anhand der von der Oberflächengeometrie abhängigen Pressungen erfolgt, bis diese einem vorgegebenen Zielmaß entsprechen.

33. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 32, **dadurch gekennzeichnet, daß** die Simulation des Herstellungsprozesses mittels einer Durchdringungsrechnung erfolgt.

34. Verfahren zur Optimierung der Oberflächengeometrie oder einer hiervon abhängigen Größe oder hiervon abhängigen Größen von Kegel- oder Hypoidzahnrädern nach einem der Ansprüche 1 bis 32, **dadurch gekennzeichnet, daß** die Simulation des Herstellungsprozesses mittels eines auf einer Hüllbedingung, also einem Verzahnungsgesetz basierenden analytischen Verfahrens erfolgt.

35. Verfahren zur Herstellung von Kegel- oder Hypoidzahnrädern mit optimierter Oberflächengeometrie, **dadurch gekennzeichnet, daß**
eine Grundauslegung des jeweiligen Kegel- oder Hypoidzahnrades für eine Basismaschine erfolgt, bei der jede Maschinenachse eine Basis-Maschineneinstellung mit einer theoretischen Bedeutung für das Zahnrad aufweist,
eine Transformation der Einstellungen der Grundauslegung für die Basismaschine auf die Einstellungen einer Frei-Form-Basismaschine mit höchstens 6-Achsen durchgeführt wird, die ein zu bearbeitendes Zahnrad und ein Werkzeug aufweist, welche jeweils um eine Achse drehbar sind und das Werkzeug und das zu bearbeitende Zahnrad in Bezug aufeinander entlang oder um eine Mehrzahl von Achsen bewegbar, vorzugsweise verschiebbar oder drehbar sind,
zumindest ein Zielmaß für Oberflächengeometrie oder eine hiervon abhängige Größe oder hiervon abhängige Größen des Kegel- oder Hypoidzahnrades vorgegebenen wird,
ein Verfahren zur Optimierung der Oberflächengeometrie oder einer hiervon abhängigen Größe oder hiervon abhängigen Größen von Kegel- oder Hypoidzahnrädern nach einem der Ansprüche 1 bis 34 ausgeführt wird,
der hieraus erhaltene Steuerparameter oder die erhaltenen Steuerparametern auf eine Frei-Form-Maschine, die auf eine Frei-Form-Basismaschine mit höchstens 6-Achsen, vorzugsweise eineindeutig abbildbar ist, abgebildet wird, und
die Frei-Form-Maschine zur Entfernung von Material von dem zu bearbeitenden Kegel- oder Hypoidzahnrad mit dem Werkzeug unter Verwendung des abgebildeten Steuerparameters oder der abgebildeten Steuerparameter zum Erhalt der optimiertern Oberflächengeometrie angesteuert wird.

36. Verfahren zur Korrektur von Kegel- oder Hypoidzahnrädern, **dadurch gekennzeichnet, daß**
für ein bereits gefertigtes Kegel- oder Hypoidzahnrad, für das bereits ein oder mehrere Steuerparameter für die Frei-Form-Basismaschine, welcher oder welche einen Einfluß auf die Oberflächengeometrie oder die hiervon abhängige Größe oder Größen des Kegel- oder Hypoidzahnrades hat oder haben, ermittelt ist oder sind,
zumindest ein Zielmaß für die Oberflächengeometrie oder eine hiervon abhängige Größe oder abhängige Größen des Kegel- oder Hypoidzahnrades vorgegebenen wird,
das Verfahren zur Optimierung der Oberflächengeometrie oder einer hiervon abhängigen Größe oder hiervon abhängigen Größen von Kegel- oder Hypoidzahnrädern nach einem der Ansprüche 1 bis 34 ausgeführt wird, und
der hieraus erhaltene neue Steuerparameter oder die erhaltenen neuen Steuerparametern auf eine Frei-Form-Maschine, die auf eine Frei-Form-Basismaschine mit höchstens 6-Achsen, vorzugsweise eineindeutig abbildbar ist, abgebildet wird, und
die Frei-Form-Maschine zur Entfernung von Material von dem zu bearbeitenden Kegel- oder Hypoidzahnrad mit dem Werkzeug unter Verwendung des abgebildeten Steuerparameters oder der abgebildeten Steuerparameter zum Erhalt der optimiertern Oberflächengeometrie angesteuert wird.

37. Computersystem zur Optimierung der Oberflächengeometrie von Kegel- oder Hypoidzahnrädern mit mindestens einer Datenverarbeitungseinheit und mindestens einem Speicher, **dadurch gekennzeichnet, daß** die Datenverarbeitungseinheit programmtechnisch so eingerichtet ist, daß sie nach dem Verfahren nach einem der Ansprüche 1 bis 34 arbeitet.

38. Zahnradherstellungs- und/oder Korrektursystem zur Herstellung oder Korrektur von Kegel- oder Hypoidzahnrädern mit

einem Computersystem nach Anspruch 37, und

einer Frei-Form-Maschine mit höchstens 6 Achsen, die ein zu bearbeitendes Zahnrad und ein Werkzeug aufweist, welche jeweils um eine Achse drehbar sind und das Werkzeug und das zu bearbeitende Zahnrad in Bezug aufeinander entlang oder um eine Mehrzahl von Achsen bewegbar, vorzugsweise verschiebbar oder drehbar sind,

und die zur Entfernung von Material von dem zu bearbeitenden Kegel- oder Hypoidzahnrad mit dem Werkzeug zum Erhalt der optimiertern Oberflächengeometrie angesteuert wird und zwar unter Verwendung eines auf die Frei-Form-Maschine abgebildeten Steuerparameters oder auf die Frei-Form-Maschine abgebildeter Steuerparameter, welcher oder welche mittels des Computersystems bestimmt wird oder werden.

**39.** Zahnradherstellungs- und/oder Korrektursystem zur Herstellung oder Korrektur von Kegel-: oder Hypoidzahnrädern nach Anspruch 38, **dadurch gekennzeichnet, daß** das Computersystem eine Speichereinheit zum. Beschreiben eines Datenträgers mit dem Steuerparameter oder den Steuerparametern oder eine Sendeeinheit zum Übertragen des Steuerparameters oder der Steuerparameter, und die. Frei-Form-Maschine mit höchstens 6 Achsen eine Leseeinheit zum Lesen des Datenträgers mit dem Steuerparameter oder den Steuerparametern oder eine Empfangseinheit zum Empfang des Steuerparameters oder der Steuerparameter aufweist.

**40.** Computerprogramm, das Instruktionen aufweist, die zur Durchführung des Verfahrens nach einem der Ansprüche 1 bis 34 eingerichtet sind.

**41.** Computerprogrammprodukt welches ein computerlesbares Medium mit einem Computerprogramm nach Anspruch 40 aufweist, bei dem jeweils nach Laden des Computerprogramms ein Computer durch das Programm zur Durchführung des Verfahren nach einem der Ansprüche 1 bis 34 veranlaßt wird.

**42.** Computerprogrammprodukt, welches-ein Computerprogramm nach Anspruch 40 auf einem elektronischen Trägersignal aufweist, bei dem jeweils nach Laden des Computerprogramms ein Computer durch das Programm zur Durchführung des Verfahrens nach einem der Ansprüche 1 bis 34 veranlaßt wird.

## Claims

**1.** Method for the optimization of the surface geometry or of a variable, dependent on this, or variables, dependent on this, of bevel or hypoid gearwheels

for their production on a free-form machine which can be mapped to a free-form basic machine with at most 6 axes uniquely in a reversible way, even to symmeteries, which

has a gearwheel to be machined and a tool which are in each case rotatable about an axis, and

the tool and the gearwheel to be machined are moveable, preferably displaceable or rotatable, with respect to one another along or about a plurality of axes,

the optimization of the surface geometry or of the variable or variables, dependent on this, of the bevel or hypoid gearwheel taking place in that

one or more control parameters, which has or have influence on the surface geometry or the variable or variables, dependent on this, of the bevel or hypoid gearwheel, is or are varied by means of a simulation of the gearwheel production process and/or a roll and/or a load-contact analysis on the free-form basic machine,

until the surface geometry or the variable or variables, dependent on this, of the bevel or hypoid gearwheel thereby corresponds at least to a predetermined target value.

**2.** Method for the optimization of the surface geometry or of a variable, dependent on this, or variables, dependent on this, of bevel or hypoid gearwheels according to Claim 1, **characterized in that** the free-form machine can be mapped onto a free-form basic machine with at most 6 axes one-to-one, even to symmetries, and their axis type and axis arrangements correspond to one another.

**3.** Method for the optimization of the surface geometry or of a variable, dependent on this, or variables, dependent on this, of bevel or hypoid gearwheels according to Claim 1 or 2, **characterized in that** the optimization of the control parameter or of the control parameters takes place for a free-form basic machine with 6 axes, preferably three axes of rotation (A, B, C) and three linear axes (X, Y, Z).

**4.** Method for the optimization of the surface geometry or of a variable, dependent on this, or variables, dependent on this, of bevel or hypoid gearwheels according to Claim 3, **characterized in that** the optimization of the control parameter or control parameters takes place for a free-form basic machine with the 6 axes

A-axis for tool rotation

B-axis for the rotation of the gearwheel to be produced

C-axis as an axis of rotation for setting the angle between the A-axis and B-axis or between the B-axis and tool-tip plane,

X-axis as a linear axis in the A-axis direction,

Y-axis as a linear axis which forms a right system with the X-axis and Z-axis, and

Z-axis as a linear axis in the direction of the common perpendicular of the A-axis and B-axis.

5. Method for the optimization of the surface geometry or of a variable, dependent on this, or variables, dependent on this, of bevel or hypoid gearwheels according to one of Claims 1 to 4, **characterized in that** at least also one tool setting parameter serves as a control parameter.

6. Method for the optimization of the surface geometry or of a variable, dependent on this, or variables, dependent on this, of bevel or hypoid gearwheels according to one of Claims 1 to 5, **characterized in that** at least also one machine control parameter for controlling at least one machine axis serves as a control parameter.

7. Method for the optimization of the surface geometry or of a variable, dependent on this, or variables, dependent on this, of bevel or hypoid gearwheels according to one of Claims 1 to 6, **characterized in that** the optimization of the control parameter or control parameters takes place for such a free-form basic machine, the axial-movement simulations of which are synchronized with one another by means of at least one, preferably continuous, particularly preferably continuously differentiable mathematical function for axis control $v_j(t, P_j)$, one of the machine axes itself or a virtual axis in this case generating a command variable t and thus serving as a master axis at least for positioning the other axes, which are functionally dependent on this command variable t and on the parameters contained in a parameter vector $P_j$ assigned to the respective function, and at least also a parameter $P_{ji}$ from the parameter vector $P_j$ of at least one of the mathematical functions $V_j$ which synchronize the axial movements being used as a control parameter.

8. Method for the optimization of the surface geometry or of a variable, dependent on this, or variables, dependent on this, of bevel or hypoid gearwheels according to Claim 7, **characterized in that** the synchronization of the axial movements takes place by means of a plurality of mathematical functions differing in segments, the segments being defined by intervals of t, for example as $[t_m, t_n]$ with $t_n > t_m$.

9. Method for the optimization of the surface geometry or of a variable, dependent on this, or variables, dependent on this, of bevel or hypoid gearwheels according to Claim 7 or 8, **characterized in that** the synchronization of the axial movements takes place by means of additively superposed mathematical functions, the superposition being particularly preferably of the form

$$v_j(t, P_j) = v_j^1(t, P_j^1) + v_j^2(t, P_j^2) + \ldots + v_j^l(t, P_j^l)$$

with $1 \geq 1$.

10. Method for the optimization of the surface geometry or of a variable, dependent on this, or variables, dependent on this, of bevel or hypoid gearwheels according to one of Claims 7 to 9, **characterized in that**, at least, a polynomial of any desired, preferably sixth order is used as a mathematical function $v_j$ for axial-movement synchronization, and the respective coefficients $p_{ji}$ of the polynomial $v_j$ are used as control parameters.

11. Method for the optimization of the surface geometry or of a variable, dependent on this, or variables, dependent on this, of bevel or hypoid gearwheels according to one of Claims 7 to 10, **characterized in that** at least also a series expansion based on Chebyshev polynomials as basic functions is used as a mathematical function $v_j$ for axial-movement synchronization, preferably in an interval $[t_1, t_2]$ with $t_1 > t_2$ as a function of the form

$$v_j(t, P) = p_{j_0} + p_{j_1} T_1(\tilde{t}) + p_{j_2} T_2(\tilde{t}) + \ldots + p_{j_i} T_i(\tilde{t}) + \ldots + p_{j_{d_v}} T_{d_v}(\tilde{t})$$

with $P_j = (p_{j_0}, p_{j_1}, p_{j_2}, \cdots p_{j_i}, \cdots, p_{j_{d_v}})$ and i=1,..., $d_v$

and $\widetilde{t} = 2\dfrac{t - t_1}{t_2 - t_1} - 1$

and also $T_i$ in each case as a Chebyshev polynomial and, in this case, the respective coefficients $p_{ji}$ of the series $v_j$ are used as control parameters.

12. Method for the optimization of the surface geometry or of a variable, dependent on this, or variables, dependent on this, of bevel or hypoid gearwheels according to one of Claims 7 to 11, **characterized in that** at least also a spline function, which is formed from polynomials, preferably of the third degree, merging continuously one into the other, is used as a mathematical function $v_j$ for axial-movement synchronization, and the respective spline coefficients are used as control parameters.

13. Method for the optimization of the surface geometry or of a variable, dependent on this, or variables, dependent on this, of bevel or hypoid gearwheels according to one of Claims 1 to 12, **characterized in that** the optimization of the surface geometry or of a variable, dependent on this, or variables, dependent on this, of the bevel or hypoid gearwheel takes place **in that** the control parameter or control parameters, which has or have influence on the surface geometry or the variable or variables, dependent on this, on the bevel or hypoid gearwheel, is or are varied by means of a numerical optimization method, until the surface geometry or the variable, dependent on this, of the bevel or hypoid gearwheel thereby corresponds to at least one predetermined target value.

14. Method for the optimization of the surface geometry or of a variable, dependent on this, or variables, dependent on this, of bevel or hypoid gearwheels according to Claim 13, **characterized in that** a derivative-based method is used as a numerical optimization method.

15. Method for the optimization of the surface geometry or of a variable, dependent on this, or variables, dependent on this, of bevel or hypoid gearwheels according to Claim 14, **characterized in that**, to calculate the derivatives (sensitivities), a difference/quotient method is used.

16. Method for the optimization of the surface geometry or of a variable, dependent on this, or variables, dependent on this, of bevel or hypoid gearwheels according to Claim 14, **characterized in that** automatic differentiation (AD) is used to calculate the derivatives (sensitivities).

17. Method for the optimization of the surface geometry or of a variable, dependent on this, or variables, dependent on this, of bevel or hypoid gearwheels according to one of Claims 1 to 12, **characterized in that** the optimization of the surface geometry or of a variable, dependent on this, or variables, dependent on this, of the bevel or hypoid gearwheel takes place such that the control parameter or control parameters which has or have influence on the surface geometry or the variable or variables, dependent on this, of the bevel or hypoid gearwheel is or are varied, using a genetic algorithm, until the surface geometry or the variable, dependent on this, of the bevel or hypoid gearwheel thereby corresponds to at least one predetermined target value.

18. Method for the optimization of the surface geometry or of a variable, dependent on this, or variables, dependent on this, of bevel or hypoid gearwheels according to one of Claims 1 to 17, **characterized in that** the optimization of the surface geometry takes place at least also by means of the form of the tooth flanks, preferably including the gearwheel root, until this form corresponds to the predetermined target value.

19. Method for the optimization of the surface geometry or of a variable, dependent on this, or variables, dependent on this, of bevel or hypoid gearwheels according to Claim 18, **characterized in that** the method of least error squares is applied to the deviations from a predetermined geometric desired structure of the tooth-flank geometry, preferably with respect to a 2-dimensional grid, in order to determine whether the form of the tooth flank corresponds to the predetermined target value.

20. Method for the optimization of the surface geometry or of a variable, dependent on this, or variables, dependent on this, of bevel or hypoid gearwheels according to one of Claims 1 to 19, **characterized in that** the optimization of the surface geometry takes place at least also by means of the tooth thickness and tooth height, until these correspond to the predetermined target value.

21. Method for the optimization of the surface geometry or of a variable, dependent on this, or variables, dependent on this, of bevel or hypoid gearwheels according to one of Claims 1 to 20, **characterized in that** the optimization of the surface geometry takes place at least also by means of the ease-off topography, until this corresponds to the predetermined target value.

22. Method for the optimization of the surface geometry or of a variable, dependent on this, or variables, dependent on this, of bevel or hypoid gearwheels according to Claim 21, **characterized in that** the method of the least error squares is applied to the deviations from a predetermined ease-off topography, preferably with respect to a 2-dimensional grid, in order to determine whether the ease-off topography corresponds to the predetermined target value.

23. Method for the optimization of the surface geometry or of a variable, dependent on this, or variables, dependent on this, of bevel or hypoid gearwheels according to one of Claims 1 to 22, **characterized in that** the optimization of the surface geometry takes place at least also by means of the rolling error, until this corresponds to the predetermined target value.

24. Method for the optimization of the surface geometry or of a variable, dependent on this, or variables, dependent on this, of bevel or hypoid gearwheels according to Claim 23, **characterized in that** the rolling error is monitored in terms of a predetermined maximum value, in order to determine whether the rolling error corresponds to the predetermined target value.

25. Method for the optimization of the surface geometry or of variables, dependent on this, of bevel or hypoid gearwheels according to Claim 23 or 24, **characterized in that** the method of the least error squares is applied to the deviations from a predetermined rolling-error function, preferably with respect to a 1-dimensional grid, in order to determine whether the rolling error corresponds to the predetermined target value.

26. Method for the optimization of the surface geometry or of a variable, dependent on this, or variables, dependent on this, of bevel or hypoid gearwheels according to one of Claims 1 to 25, **characterized in that** the optimization of the surface geometry takes place at least also by means of the contact-pattern position, until this corresponds to a predetermined target value.

27. Method for the optimization of the surface geometry or of a variable, dependent on this, or variables, dependent on this, of bevel or hypoid gearwheels according to Claim 26, **characterized in that** the method of the least error squares is applied to the deviations of the form and/or of the centre-point position of the actual contact pattern from a contact pattern predetermined as a contour line in an ease-off topography cleared of the rolling error, preferably with respect to a 1-dimensional grid, in order to determine whether the contact pattern corresponds to the predetermined target value.

28. Method for the optimization of the surface geometry or of a variable, dependent on this, or variables, dependent on this, of bevel or hypoid gearwheels according to Claim 26 or 27, **characterized in that** the method of elliptic approximation is used in order to determine whether the contact pattern corresponds to the predetermined target value.

29. Method for the optimization of the surface geometry or of a variable, dependent on this, or variables, dependent on this, of bevel or hypoid gearwheels according to one of Claims 1 to 28, **characterized in that** the optimization of the surface geometry takes place at least also by means of the profile of the contact path or contact paths, until this profile corresponds to the predetermined target value.

30. Method for the optimization of the surface geometry or of a variable, dependent on this, or variables, dependent on this, of bevel or hypoid gearwheels according to one of Claims 1 to 29, **characterized in that** the optimization of the surface geometry takes place at least also by means of the flank clearance and tip clearance until these correspond to the predetermined target value.

31. Method for the optimization of the surface geometry or of a variable, dependent on this, or variables, dependent on this, of bevel or hypoid gearwheels according to one of Claims 1 to 30, **characterized in that** the optimization takes place by means of the tensions dependent on the surface geometry, until these correspond to a predetermined target value.

32. Method for the optimization of the surface geometry or of a variable, dependent on this, or variables, dependent on this, of bevel or hypoid gearwheels according to one of Claims 1 to 31, **characterized in that** the optimization takes place by means of the pressures dependent on the surface geometry, until these correspond to a predetermined target value.

33. Method for the optimization of the surface geometry or of a variable, dependent on this, or variables, dependent on this, of bevel or hypoid gearwheels according to one of Claims 1 to 32, **characterized in that** the simulation of the production process takes place by means of penetration calculation.

34. Method for the optimization of the surface geometry or of a variable, dependent on this, or variables, dependent on this, of bevel or hypoid gearwheels according to one of Claims 1 to 32, **characterized in that** the simulation of the production process takes place by means of an analytic method based on an enveloping condition, that is to say a toothing law.

35. Method for the production of bevel or hypoid gearwheels with optimized surface geometry, **characterized in that** a basic design of the respective bevel or hypoid gearwheel for a basic machine is carried out, in which each machine axis has a basic machine setting with a theoretical significance for the gearwheel,
a transformation of the settings of the basic design for the basic machine to the settings of a free-form basic machine with at most 6 axes is carried out, the latter having a gearwheel to be machined and a tool which are in each case rotatable about an axis, and the tool and the gearwheel to be machined are moveable, preferably displaceable or rotatable, with respect to one another along or about a plurality of axes,
at least one target value for surface geometry or a variable, dependent on this, or variables, dependent on this, of the bevel or hypoid gearwheel are determined,
a method for the optimization of the surface geometry or of a variable, dependent on this, or variables, dependent on this, of bevel or hypoid gearwheels according to one of Claims 1 to 34 is carried out,
the control parameter obtained from this or the control parameters obtained are mapped to a free-form machine which can be mapped to a free-form basic machine with at most 6 axes, preferably bijectively, and
the free-form machine is controlled in order, by means of the tool, to remove material from the bevel or hypoid gearwheel to be machined, using the mapped control parameter or mapped control parameters, so as to obtain the optimized surface geometry.

36. Method for the correction of bevel or hypoid gearwheels, **characterized in that**,
for an already manufactured bevel or hypoid gearwheel, for which one or more control parameters, which has or have influence on the surface geometry or the variable or variables, dependent on this, of the bevel or hypoid gearwheel, has or have already been determined for the free-form basic machine,
at least one target value for the surface geometry or a variable, dependent on this, or variables, dependent on this, of the bevel or hypoid gearwheel is predetermined,
the method for the optimization of the surface geometry or of variable, dependent on this, or variables, dependent on this, of bevel or hypoid gearwheels according to one of Claims 1 to 34 is carried out, and
the new control parameter obtained from this or the new control parameters obtained is or are mapped to a free-form machine which can be mapped to a free-form basic machine with at most 6 axes, preferably bijectively, and
the free-form machine is controlled in order, by means of the tool, to remove material from the bevel or hypoid gearwheel to be machined, using the mapped control parameter or mapped control parameters, so as to obtain the optimized surface geometry.

37. Computer system for the optimization of the surface geometry of bevel or hypoid gearwheels, with at least one data processing unit and with at least one memory, **characterized in that** the data processing unit is set up, in program terms, such that it operates by the method according to one of Claims 1 to 34.

38. Gearwheel production and/or correction system for the production or correction of bevel or hypoid gearwheels, comprising
a computer system according to Claim 37, and
a free-form machine with at most 6 axes, which has a gearwheel to be machined and a tool which are in each case rotatable about an axis, and the tool and the gearwheel to be machined are moveable, preferably displaceable or rotatable, with respect to one another along or about a plurality of axes,
and which is controlled in order, by means of the tool, to remove material from the bevel or hypoid gearwheel to be machined, so as to obtain the optimized surface geometry, specifically using a control parameter mapped onto the free-form machine or control parameters mapped onto the free-form machine, which is or are determined by means of the computer system.

39. Gearwheel production and/or correction system for the production or correction of bevel or hypoid gearwheels according to Claim 38, **characterized in that** the computer system has a storage unit for writing the control parameter or control parameters on a data carrier, or a transmission unit for transmitting the control parameter or control parameters, and the free-form machine with at most 6 axes has a read unit for reading the data carrier having the control parameter or control parameters or a reception unit for receiving the control parameter or control parameters.

40. Computer program, which has instructions which are set up for carrying out the method according to one of Claims 1 to 34.

41. Computer program product, which has a computer-readable medium with a computer-program, according to Claim 40, in which, in each case after the loading of the computer program, a computer is induced by the program to carry out the method according to one of Claims 1 to 34.

42. Computer program product, which has a computer program, according to Claim 40 on an electronic carrier signal, in which, in each case after the loading of the computer program, a computer is induced by the program to carry out the method according to one of Claims 1 to 34.

**Revendications**

1. Procédé pour optimiser la géométrie de surface ou une dimension en dépendant ou des dimensions en dépendant, de roues dentées coniques ou hypoïdes
   pour leur fabrication sur une machine de formage libre, qui peut être reproduite univoquement de manière inversable à l'exception des symétries à partir d'une machine de base de formage libre avec au maximum 6 axes, qui présente une roue dentée à usiner et un outil, lesquels peuvent tourner à chaque fois autour d'un axe, et
   l'outil et la roue dentée à usiner pouvant être déplacés l'un par rapport à l'autre, de préférence par coulissement ou rotation, le long ou autour d'une pluralité d'axes,
   l'optimisation de la géométrie de surface ou de la dimension en dépendant ou des dimensions en dépendant, de la roue dentée conique ou hypoïde s'effectuant par le fait que
   l'on fait varier un ou plusieurs paramètres de commande, qui ont une influence sur la géométrie de surface ou la dimension en dépendant ou les dimensions en dépendant, de la roue dentée conique ou hypoïde, à l'aide d'une simulation du processus de fabrication de la roue dentée et/ou d'un fraisage par développante et/ou d'une analyse de contact de charge sur la machine de base de formage libre jusqu'à ce que
   par ce biais, la géométrie de surface ou la dimension en dépendant ou les dimensions en dépendant, de la roue dentée conique ou hypoïde, corresponde au moins à une mesure cible prédéfinie.

2. Procédé pour optimiser la géométrie de surface ou une dimension en dépendant ou des dimensions en dépendant, de roues dentées coniques ou hypoïdes selon la revendication 1, **caractérisé en ce que** la machine de formage libre peut être reproduite biunivoquement (bijectivement) à l'exception des symétries à partir d'une machine de base de formage libre avec au maximum 6 axes, et **en ce que** ses types d'axes et l'agencement de ses axes correspondent mutuellement.

3. Procédé pour optimiser la géométrie de surface ou une dimension en dépendant ou des dimensions en dépendant, de roues dentées coniques ou hypoïdes selon la revendication 1 ou 2, **caractérisé en ce que** l'optimisation du paramètre de commande ou des paramètres de commande s'effectue pour une machine de base de formage libre avec 6 axes, de préférence avec trois axes, (A, B, C) et trois axes linéaires (X, Y, Z).

4. Procédé pour optimiser la géométrie de surface ou une dimension en dépendant ou des dimensions en dépendant, de roues dentées coniques ou hypoïdes selon la revendication 3, **caractérisé en ce que** l'optimisation du paramètre de commande ou des paramètres de commande s'effectue, pour une machine de base de formage libre, avec les six axes suivants :

   Axe A pour la rotation de l'outil,
   Axe B pour la rotation de la roue dentée à fabriquer,

Axe C en tant qu'axe de rotation pour l'ajustement de l'angle entre l'axe A et l'axe B, ou entre l'axe B et le plan de la pointe de l'outil,
Axe X en tant qu'axe linéaire dans la direction de l'axe A,
Axe Y en tant qu'axe linéaire qui forme avec l'axe X et l'axe Z un système de coordonnées à droite, et
Axe Z en tant qu'axe linéaire dans la direction de la perpendiculaire commune à l'axe A et à l'axe B.

5. Procédé pour optimiser la géométrie de surface ou une dimension en dépendant ou des dimensions en dépendant, de roues dentées coniques ou hypoïdes selon l'une quelconque des revendications 1 à 4, **caractérisé en ce que** l'on utilise comme paramètre de commande au moins aussi un paramètre d'ajustement d'outil.

6. Procédé pour optimiser la géométrie de surface ou une dimension en dépendant ou des dimensions en dépendant, de roues dentées coniques ou hypoïdes selon l'une quelconque des revendications 1 à 5, **caractérisé en ce que** l'on utilise comme paramètre de commande au moins aussi un paramètre de commande de machine pour la commande d'au moins un axe de machine.

7. Procédé pour optimiser la géométrie de surface ou une dimension en dépendant ou des dimensions en dépendant, de roues dentées coniques ou hypoïdes selon l'une quelconque des revendications 1 à 6, **caractérisé en ce que** l'optimisation du paramètre de commande ou des paramètres de commande a lieu pour une telle machine de base de formage libre dont les simulations de mouvements d'axes sont synchronisées les unes par rapport aux autres par l'intermédiaire d'au moins une fonction mathématique de préférence continue, particulièrement préférablement continûment différentiable, pour la commande des axes $v_j(t, P_j)$, l'un des axes de la machine produisant lui-même, ou bien un axe virtuel produisant en l'occurrence, une valeur de guidage t, et servant ainsi d'axe directeur pour au moins positionner les autres axes qui dépendent fonctionnellement de cette valeur de guidage t et des paramètres contenus dans un vecteur de paramètre $P_j$ associé à la fonction particulière, et au moins également un paramètre $p_{ji}$, issu du vecteur de paramètre $P_j$ d'au moins une des fonctions mathématiques $v_j$ synchronisant les mouvements des axes étant utilisé en tant que paramètre de commande.

8. Procédé pour optimiser la géométrie de surface ou une dimension en dépendant ou des dimensions en dépendant, de roues dentées coniques ou hypoïdes selon la revendication 7, **caractérisé en ce que** la synchronisation des mouvements des axes s'effectue au moyen de plusieurs fonctions mathématiques différentes par sections, les sections étant définies par des intervalles de t, quasiment sous la forme $[t_m, t_n]$, avec $t_n > t_m$.

9. Procédé pour optimiser la géométrie de surface ou une dimension en dépendant ou des dimensions en dépendant, de roues dentées coniques ou hypoïdes selon la revendication 7 ou 8, **caractérisé en ce que** la synchronisation des mouvements des axes s'effectue au moyen de fonctions mathématiques superposées par addition, la superposition se présentant particulièrement préférablement sous la forme

$$v_j(t, P_j) = v_j^1(t, P_j^1) + v_j^2(t, P_j^2) + \ldots + v_j^l(t, P_j^l)$$

avec $1 \geq 1$.

10. Procédé pour optimiser la géométrie de surface ou une dimension en dépendant ou des dimensions en dépendant, de roues dentées coniques ou hypoïdes selon l'une quelconque des revendications 7 à 9, **caractérisé en ce que** l'on utilise comme fonction mathématique $v_j$ pour la synchronisation des mouvements des axes au moins aussi un polynôme d'ordre quelconque, de préférence d'ordre six, et en tant que paramètre de commande les coefficients respectifs $p_{ji}$ du polynôme $v_j$.

11. Procédé pour optimiser la géométrie de surface ou une dimension en dépendant ou des dimensions en dépendant, de roues dentées coniques ou hypoïdes selon l'une quelconque des revendications 7 à 10, **caractérisé en ce que** l'on utilise comme fonction mathématique $v_j$ pour la synchronisation des mouvements des axes au moins aussi un développement en série basé sur des polynômes de Tschebyscheff, de préférence dans un intervalle $[t_1, t_2]$ avec $t_1 > t_2$, en tant que fonction de forme

$$v_j(t,P) = p_{j_0} + p_{j_1}T_1(\widetilde{t}) + p_{j_2}T_2(\widetilde{t}) + \ldots + p_{j_i}T_i(\widetilde{t}) + \ldots + p_{j_{d_v}}T_{d_v}(\widetilde{t})$$

avec $P_j = (p_{j_0}, p_{j_1}, p_{j_2}, \cdots p_{j_i}, \cdots, p_{j_{d_v}})$ et i=1,..., $d_v$

et $\widetilde{t} = 2\dfrac{t - t_1}{t_2 - t_1} - 1$

et $T_i$ étant à chaque fois un polynôme de Tschebyscheff

et les coefficients respectifs $p_{j_i}$ de la série $v_j$ étant utilisés dans ce cas en tant que paramètres de commande.

**12.** Procédé pour optimiser la géométrie de surface ou une dimension en dépendant ou des dimensions en dépendant, de roues dentées coniques ou hypoïdes selon l'une quelconque des revendications 7 à 11, **caractérisé en ce que** l'on utilise comme fonction mathématique $v_j$ pour la synchronisation des mouvements des axes au moins aussi une fonction spline qui est formée par une progression continue de polynômes les uns dans les autres, de préférence de degré trois, et l'on utilise comme paramètres de commande les coefficients de spline correspondants.

**13.** Procédé pour optimiser la géométrie de surface ou une dimension en dépendant ou des dimensions en dépendant, de roues dentées coniques ou hypoïdes selon l'une quelconque des revendications 1 à 12, **caractérisé en ce que** l'optimisation de la géométrie de surface ou d'une dimension en dépendant ou de dimensions en dépendant, de la roue dentée conique ou hypoïde s'effectue par le fait que l'on fait varier le ou les paramètres de commande, qui ont une influence sur la géométrie de surface ou la dimension en dépendant ou les dimensions en dépendant, de la roue dentée conique ou hypoïde, à l'aide d'un procédé d'optimisation numérique jusqu'à ce que par ce biais, la géométrie de surface ou la dimension en dépendant, de la roue dentée conique ou hypoïde, corresponde au moins à une mesure cible prédéfinie.

**14.** Procédé pour optimiser la géométrie de surface ou une dimension en dépendant ou des dimensions en dépendant, de roues dentées coniques ou hypoïdes selon la revendication 13, **caractérisé en ce que** l'on utilise comme procédé d'optimisation numérique un procédé dérivatif.

**15.** Procédé pour optimiser la géométrie de surface ou une dimension en dépendant ou des dimensions en dépendant, de roues dentées coniques ou hypoïdes selon la revendication 14, **caractérisé en ce que** l'on utilise pour le calcul des dérivées (sensibilités) un procédé différence divisée.

**16.** Procédé pour optimiser la géométrie de surface ou une dimension en dépendant ou des dimensions en dépendant, de roues dentées coniques ou hypoïdes selon la revendication 14, **caractérisé en ce que** l'on utilise pour le calcul des dérivées (sensibilités) la différentiation automatique (AD).

**17.** Procédé pour optimiser la géométrie de surface ou une dimension en dépendant ou des dimensions en dépendant, de roues dentées coniques ou hypoïdes selon l'une quelconque des revendications 1 à 12, **caractérisé en ce que** l'optimisation de la géométrie de surface ou d'une dimension en dépendant ou de dimensions en dépendant, de la roue dentée conique ou hypoïde s'effectue par le fait que l'on fait varier le ou les paramètres de commande, qui ont une influence sur la géométrie de surface ou la dimension en dépendant ou les dimensions en dépendant, de la roue dentée conique ou hypoïde, à l'aide d'un algorithme génétique jusqu'à ce que par ce biais, la géométrie de surface ou la dimension en dépendant ou les dimensions en dépendant, de la roue dentée conique ou hypoïde, corresponde au moins à une mesure cible prédéfinie.

**18.** Procédé pour optimiser la géométrie de surface ou une dimension en dépendant ou des dimensions en dépendant, de roues dentées coniques ou hypoïdes selon l'une quelconque des revendications 1 à 17, **caractérisé en ce que** l'optimisation de la géométrie de surface s'effectue aussi au moins à l'aide de la forme des flancs des dents, de préférence y compris la base des dents, jusqu'à ce qu'elle corresponde à la mesure cible prédéfinie.

**19.** Procédé pour optimiser la géométrie de surface ou une dimension en dépendant ou des dimensions en dépendant, de roues dentées coniques ou hypoïdes selon la revendication 18, **caractérisé en ce que** l'on utilise le procédé de l'erreur quadratique moyenne sur les écarts par rapport à une structure de consigne géométrique prédéfinie de la géométrie des flancs des dents, de préférence par rapport à une grille bidimensionnelle, pour déterminer si la forme des flancs des dents correspond à la mesure cible prédéfinie.

20. Procédé pour optimiser la géométrie de surface ou une dimension en dépendant ou des dimensions en dépendant, de roues dentées coniques ou hypoïdes selon l'une quelconque des revendications 1 à 19, **caractérisé en ce que** l'optimisation de la géométrie de surface s'effectue au moins aussi à l'aide de l'épaisseur des dents et de la hauteur des dents, jusqu'à ce qu'elles correspondent à la mesure cible prédéfinie.

21. Procédé pour optimiser la géométrie de surface ou une dimension en dépendant ou des dimensions en dépendant, de roues dentées coniques ou hypoïdes selon l'une quelconque des revendications 1 à 20, **caractérisé en ce que** l'optimisation de la géométrie de surface s'effectue au moins aussi à l'aide de la topographie EaseOff, jusqu'à ce qu'elle corresponde à la mesure cible prédéfinie.

22. Procédé pour optimiser la géométrie de surface ou une dimension en dépendant ou des dimensions en dépendant, de roues dentées coniques ou hypoïdes selon la revendication 21, **caractérisé en ce que** l'on utilise le procédé de l'erreur quadratique moyenne sur les écarts par rapport à une topographie EaseOff prédéfinie, de préférence par rapport à une grille bidimensionnelle, pour déterminer si la topographie EaseOff correspond à la mesure cible prédéfinie.

23. Procédé pour optimiser la géométrie de surface ou une dimension en dépendant ou des dimensions en dépendant, de roues dentées coniques ou hypoïdes selon l'une quelconque des revendications 1 à 22, **caractérisé en ce que** l'optimisation de la géométrie de surface s'effectue au moins aussi à l'aide de l'erreur de fraisage, jusqu'à ce qu'elle corresponde à la mesure cible prédéfinie.

24. Procédé pour optimiser la géométrie de surface ou une dimension en dépendant ou des dimensions en dépendant, de roues dentées coniques ou hypoïdes selon la revendication 23, **caractérisé en ce que** l'erreur de fraisage est contrôlée par rapport à une valeur maximale prédéfinie, pour déterminer si l'erreur de fraisage correspond à la mesure cible prédéfinie.

25. Procédé pour optimiser la géométrie de surface ou une dimension en dépendant ou des dimensions en dépendant, de roues dentées coniques ou hypoïdes selon la revendication 23 ou 24, **caractérisé en ce que** l'on utilise le procédé de l'erreur quadratique moyenne sur les écarts par rapport à une fonction prédéfinie d'erreurs de fraisage, de préférence par rapport à une grille unidimensionnelle, pour déterminer si l'erreur de fraisage correspond à la mesure cible prédéfinie.

26. Procédé pour optimiser la géométrie de surface ou une dimension en dépendant ou des dimensions en dépendant, de roues dentées coniques ou hypoïdes selon l'une quelconque des revendications 1 à 25, **caractérisé en ce que** l'optimisation de la géométrie de surface s'effectue au moins aussi à l'aide de la position de la portée, jusqu'à ce qu'elle corresponde à la mesure cible prédéfinie.

27. Procédé pour optimiser la géométrie de surface ou une dimension en dépendant ou des dimensions en dépendant, de roues dentées coniques ou hypoïdes selon la revendication 26, **caractérisé en ce que** l'on utilise le procédé de l'erreur quadratique moyenne sur les écarts par rapport à la forme et/ou la position du centre de la portée effective d'une portée prédéfinie en tant que ligne de hauteur dans une topographie EaseOff dépourvue de l'erreur de fraisage, de préférence par rapport à une grille unidimensionnelle, afin de déterminer si la portée correspond à la mesure cible prédéfinie.

28. Procédé pour optimiser la géométrie de surface ou une dimension en dépendant ou des dimensions en dépendant, de roues dentées coniques ou hypoïdes selon la revendication 26 ou 27, **caractérisé en ce que** l'on utilise le procédé d'approximation d'ellipse afin de déterminer si la portée correspond à la mesure cible prédéfinie.

29. Procédé pour optimiser la géométrie de surface ou une dimension en dépendant ou des dimensions en dépendant, de roues dentées coniques ou hypoïdes selon l'une quelconque des revendications 1 à 28, **caractérisé en ce que** l'optimisation de la géométrie de surface s'effectue au moins aussi à l'aide de l'allure de la course de contact ou des courses de contact, jusqu'à ce qu'elle corresponde à la mesure cible prédéfinie.

**30.** Procédé pour optimiser la géométrie de surface ou une dimension en dépendant ou des dimensions en dépendant, de roues dentées coniques ou hypoïdes selon l'une quelconque des revendications 1 à 29, **caractérisé en ce que** l'optimisation de la géométrie de surface s'effectue au moins aussi à l'aide du jeu des flancs et des têtes, jusqu'à ce que ceux-ci correspondent à la mesure cible prédéfinie.

**31.** Procédé pour optimiser la géométrie de surface ou une dimension en dépendant ou des dimensions en dépendant, de roues dentées coniques ou hypoïdes selon l'une quelconque des revendications 1 à 30, **caractérisé en ce que** l'optimisation s'effectue à l'aide des tensions dépendant de la géométrie de surface, jusqu'à ce que celles-ci correspondent à une mesure cible prédéfinie.

**32.** Procédé pour optimiser la géométrie de surface ou une dimension en dépendant ou des dimensions en dépendant, de roues dentées coniques ou hypoïdes selon l'une quelconque des revendications 1 à 31, **caractérisé en ce que** l'optimisation s'effectue à l'aide des pressions dépendant de la géométrie de surface, jusqu'à ce que celles-ci correspondent à une mesure cible prédéfinie.

**33.** Procédé pour optimiser la géométrie de surface ou une dimension en dépendant ou des dimensions en dépendant, de roues dentées coniques ou hypoïdes selon l'une quelconque des revendications 1 à 32, **caractérisé en ce que** la simulation du processus de fabrication s'effectue au moyen d'un calcul de pénétration.

**34.** Procédé pour optimiser la géométrie de surface ou une dimension en dépendant ou des dimensions en dépendant, de roues dentées coniques ou hypoïdes selon l'une quelconque des revendications 1 à 32, **caractérisé en ce que** la simulation du processus de fabrication s'effectue au moyen d'un procédé analytique basé sur une exigence d'enveloppe, c'est-à-dire une loi sur les dentures.

**35.** Procédé de fabrication de roues dentées coniques ou hypoïdes de géométrie de surface optimisée, **caractérisé en ce que**
l'on produit une forme de base de chaque roue dentée conique ou hypoïde pour une machine de base, dans laquelle chaque axe de machine présente un ajustement de machine de base avec une signification théorique pour la roue dentée,
l'on effectue une transformation des ajustements de la forme de base pour la machine de base en fonction des ajustements d'une machine de base de formage libre avec au maximum 6 axes, qui présente une roue dentée à usiner et un outil, l'outil et la roue dentée à usiner pouvant être déplacés l'un par rapport à l'autre, de préférence par coulissement ou rotation, le long ou autour d'une pluralité d'axes,
on prédéfinit au moins une mesure cible pour la géométrie de surface ou une dimension en dépendant ou des dimensions en dépendant, de la roue dentée conique ou hypoïde,
on met en oeuvre un procédé pour optimiser la géométrie de surface ou une dimension en dépendant ou des dimensions en dépendant, de roues dentées coniques ou hypoïdes selon l'une quelconque des revendications 1 à 34,
l'on reproduit le ou les paramètres de commande en résultant, sur une machine de formage libre, qui peut être reproduite biunivoquement à partir d'une machine de base de formage libre avec au maximum 6 axes, et
l'on commande la machine de formage libre de manière à ce qu'elle enlève de la matière de la roue dentée conique ou hypoïde à usiner avec l'outil en utilisant le ou les paramètres de commande reproduits pour obtenir la géométrie de surface optimisée.

**36.** Procédé de correction de roues dentées coniques ou hypoïdes, **caractérisé en ce que**
pour une roue dentée conique ou hypoïde déjà fabriquée, pour laquelle on a déjà déterminé un ou plusieurs paramètres de commande pour la machine de base de formage libre qui ont une influence sur la géométrie de surface ou la dimension en dépendant ou les dimensions en dépendant, de la roue dentée conique ou hypoïde,
on prédéfinit au moins une mesure cible pour la géométrie de surface ou la dimension en dépendant ou les dimensions en dépendant, de la roue dentée conique ou hypoïde,
on met en oeuvre le procédé pour optimiser la géométrie de surface ou la dimension en dépendant ou les dimensions en dépendant, de roues dentées coniques ou hypoïdes selon l'une quelconque des revendications 1 à 34, et
l'on reproduit le ou les nouveaux paramètres de commande en résultant sur une machine de formage libre qui peut être reproduite à partir d'une machine de base de formage libre avec au maximum 6 axes, de préférence de manière biunivoque, et
l'on commande la machine de formage libre pour enlever de la matière de la roue dentée conique ou hypoïde à usiner avec l'outil en utilisant le ou les paramètres de commande reproduits pour obtenir la géométrie de surface optimisée.

**37.** Système informatique pour optimiser la géométrie de surface de roues dentées coniques ou hypoïdes comprenant au moins une unité de traitement des données et au moins une mémoire, **caractérisé en ce que** l'unité de traitement des données est conçue par une technique de programmation de telle sorte qu'elle fonctionne conformément au procédé selon l'une quelconque des revendications 1 à 34.

**38.** Système de fabrication et/ou de correction de roues dentées pour la fabrication ou la correction de roues dentées coniques ou hypoïdes
comprenant un système informatique selon la revendication 37, et
une machine de formage libre avec au maximum 6 axes, qui présente une roue dentée à usiner et un outil, lesquels peuvent tourner à chaque fois autour d'un axe, et l'outil et la roue dentée à usiner pouvant être déplacés l'un par rapport à l'autre, de préférence par coulissement ou rotation, le long ou autour d'une pluralité d'axes,
et qui est commandée de manière à ce qu'elle enlève de la matière de la roue dentée conique ou hypoïde à usiner avec l'outil pour obtenir la géométrie de surface optimisée et ce en utilisant un ou des paramètres de commande reproduits sur la machine de formage libre, lesquels sont déterminés au moyen du système informatique.

**39.** Système de fabrication et/ou de correction de roues dentées pour la fabrication ou la correction de roues dentées coniques ou hypoïdes selon la revendication 38, **caractérisé en ce que** le système informatique présente une unité de mémoire pour écrire sur un support de données, le ou les paramètres de commande, ou une unité émettrice pour transmettre le ou les paramètres de commande, et la machine de formage libre avec au maximum 6 axes présente une unité de lecture pour lire le support de données comprenant le ou les paramètres de commande, ou une unité de réception pour recevoir le ou les paramètres de commande.

**40.** Programme informatique présentant des instructions destinées à mettre en oeuvre le procédé selon l'une quelconque des revendications 1 à 34.

**41.** Produit de programme informatique qui présente un support lisible par ordinateur avec un programme informatique selon la revendication 40, dans lequel à chaque fois, après le chargement du programme informatique, un ordinateur reçoit du programme l'ordre de mettre en oeuvre le procédé selon l'une quelconque des revendications 1 à 34.

**42.** Produit de programme informatique, qui présente un programme informatique selon la revendication 40 sur un signal porteur électronique, dans lequel, à chaque fois après le chargement du programme informatique, un ordinateur reçoit du programme l'ordre de mettre en oeuvre le procédé selon l'une quelconque des revendications 1 à 34.

# FIG. 1

# FIG. 2

# FIG. 3

```
┌──────────────────────────┐
│  Maschineneinstellungen  │
│  Freiform-Basismaschine  │
└──────────────────────────┘
```

Maschineneinstellungen
Freiform-Basismaschine

(Erweiterte) Simulation

Sensitivitäten

Designgrößen Ist

Optimierungschritt

Abweichungen

Vergleich und ggf. Abbruch

Designgrößen Soll

# FIG. 4

Maschineneinstellungen Freiform-Basismaschine

Werkzeugeinstellungen

Herstellungssimulation

Exakte Zahnradgeometrie

# FIG. 5

Exakte Zahnradgeometrie von Ritzel und Rad

Getriebeparameter

Abwälzsimulation / Zahnkontaktanalyse

Kontaktgeometrie

Spiel, etc.

# FIG. 6

# FIG. 7

Baugröße, Übersetzungsverhältnis, Drehmoment,
etc.

Grundauslegung

Grundgeometrie

Berechnung der Maschinen-
und Werkzeugeinstellungen

Maschineneinstellungen
Basismaschine

Transformation oder Integration
der Maschineneinstellungen

Maschineneinstellungen
Freiform-Basismaschine

Werkzeugeinstellungen

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0784525 A
- US 4981402 A
- EP 0784525 B1

### In der Beschreibung aufgeführte Nicht-Patentliteratur

- Numerical Optimization. **NOCEDAL, J. ; WRIGHT, S.J.** Springer Series in Operations Research. 1999
- **STADTFELD, H.J.** The Universal Motion Concept for Bevel Gear Production. *Proceedings of the 4th World Congress on Gearing and Power Transmission,* 1999, vol. 1, 595-607
- **SIMON, V.** Optimal Machine Tool Setting for Hypoid Gears Improving Load Distribution. *ASME Journal of Mechanical Design 123,* Dezember 2001, 577-582
- **GOSSELIN, C. ; GUERTIN, T. ; REMOND, D. ; JEAN, Y.** Simulation and Experimental Measurement of the Transmission Error of Real Hypoid Gears Under Load. *ASME Journal of Mechanical Design,* Marz 2000, vol. 122
- **GOSSELIN, C. ; MASSETH, J. ; NOGA, S.** Stock Distribution Optimization in Fixed Setting Hypoid Pinions. *Gear Technology,* Juni 2001
- **VOGEL, O. ; GRIEWANK, A. ; HENLICH, T. ; SCHLECHT, T.** Automatisches Differenzieren im Maschinenbau - Simulation und Optimierung bogenverzahnter Kegelradgetriebe. *Dresdner Maschinenelemente Kolloquium - DMK2003,* 2003, 177-194
- **MÜLLER, H. ; WIENER, D. ; DUTSCHK, R.** A Modular Approach Computing Spiral Bevel Gears and Curvic Couplings. *Proceedings of the 4th World Congress on Gearing and Power Transmission,* 1999, vol. 1, 531-540
- **BRONSTEIN, I.N. ; SEMENDJAJEW, K.A. ; MUSIOL, G. ; MÜHLIG, G.** *Taschenbuch der Mathematik,* 2001, 955-960
- **GOLUB, G. ; ORTEGA, J. M.** *Scientific Computing - Eine Einführung in das wissenschaftliche Rechnen und Parallele Numerik,* 1996

- **NOCEDAL, J. ; WRIGHT, S.J.** Numerical Optimization. *Springer Series in Operations Research,* 1999
- **VOGEL, O. ; GRIEWANK, A. ; HENLICH, T. ; SCHLECHT, T.** Automatisches Differerizieren im Maschinenbau - Simulation und Optimierung bogenverzahnter Kegelradgetriebe. *Dresdner Maschinenelemente Kolloquium - DMK2003,* 2003, 177-194
- Accurate Gear Tooth Contact and Sensitivity Computation for Hypoid Bevel Gears. **VOGEL, O.** Automatic Differentiation of Algoithms - From Simulation to Optimization. 2002
- **PREUß, W. ; WENISCH, G.** *Numerische Mathematik,* 2001, 234
- **KOZA, JOHN A.** Genetic Programming. *Prinzip des 'Genetic Programming,* 1992, 76f
- **HUTSCHENREITER U.** A New Method for Bevel Gear Tooth Flank Computation. *Computational Differentiation - Techniques, Applications, and Tools,* 1996
- **VOGEL, O. ; GRIEWANK, A. ; BÄR, G.** Direct Gear Tooth Contact Analysis for Hypoid Bevel Gears. *Computer Methods in Applied Mechanics and Engineering,* vol. 191 (2202), 3965-3982
- **GRIEWANK, A.** Evaluating Derivatives- Principles and Techniques of Algorithmic Differentiation. *Frontiers in Applied Mathematics,* 2000, vol. 129
- **BRONSTEIN, I.N. ; SEMENDJAJEW, K.A. ; MUSIOL, G. ; MÜHLIG, G.** *Taschenbuch der Mathematik,* 2001, 947-948
- **VOGEL, O ; GRIEWANK, A. ; HENLICH, T. ; SCHLECHT, B.** Automatisches Differenzieren im Maschinenbau - Simulation und Optimierung bogenverzahnter Kegetradgetriebe. *Dresdner Maschinenelemente Kolloquium - DMK2003,* 2003, 177-194